# EUROPEAN PATENT APPLICATION

(11) **EP 2 633 951 A1**
(43) Date of publication of application: **04.09.2013**
(21) Application number: 11835979.3
(22) Date of filing: 27.09.2011
(51) Int. Cl.: B23Q 37/00, B23Q 1/00, B23Q 7/04

(54) **UNIT CONFIGURATION TYPE MACHINE TOOL, TRANSFER DEVICE, WORKING EQUIPMENT**

(30) Priority: 26.10.2010 JP 2010239419
(71) Applicant: Murata Machinery, Ltd., Minami-ku Kyoto-shi Kyoto 601-8326 (JP)
(72) Inventor: MORI, Ryuzo, Inuyama-shi Aichi 484-8502 (JP); KAWAI, Hidetsugu, Inuyama-shi Aichi 484-8502 (JP); ISHIKAWA, Kazuhiro, Inuyama-shi Aichi 484-8502 (JP)
(74) Representative: Zimmermann, Tankred Klaus
(86) International application number: PCT/JP2011/072000
(87) International publication number: WO 2012/056839

(57) **Abstract**

A machine tool (2) includes a base (2A) and a plurality of types of mechanism units (2U). Each of the mechanism units (2U) has a unit portion wiring (67). Some of the mechanism units (2U) have a unit built-in control circuit (2Ud) to control a drive source (2Uc) within such unit. A conveyance apparatus (1) includes a guide equipped frame (12) and a traveling member (3). The guide equipped frame (12) includes a plurality of travel guide units (12U) connected together. The travel guide units (12U) include a rectilinear section and a curved section. A travel drive of the traveling member (3) is realized by a linear motor (5) comprised of a plurality of individual motors (6), which are armatures on a primary side provided in the travel guide units (12U), and a mover (7) provided in the traveling member (3).

## Description

### CROSS REFERENCE TO THE RELATED APPLICATION

This application is based on and claims Convention priority to Japanese patent application No. 2010-239419, filed October 26, 2010, the entire disclosure of which is herein incorporated by reference as a part of this application.

### BACKGROUND OF THE INVENTION

### (Field of the Invention)

The present invention relates to a unit configuration type machine tool, a conveyance apparatus and a processing equipment, in which any one of the machine tool and the conveyance apparatus for a work transportation is designed to be of a unit configuration type capable of recombining and/or expanding and which can be transformed to various figurations to enable them to accommodate a mixed production or the like.

### (Description of Related Art)

Hitherto, in the machine tool, a unit configuration type machine tool has been suggested (as disclosed in, for example, the Patent Document 1 listed below) in which a feed slide, a headstock, a tool post and others are rendered to be of a unit configuration type and by recombining the units, a turning center, for example, is formed or a machining center is formed. The machine tool of a recombinable type discussed above is known as a module configuration machine tool or block build type machine tool.

Also, as a conveyance apparatus to deliver or discharge workpieces in or from a machine tool such as, for example, a lathe or turning machine, the type has hitherto been well known, which includes a lifter, mounted on a traveling member movable along a guide rail, and a chuck provided in a loader head at a lower end of the lifter to hold a workpiece. In this type of the conveyance apparatus, the traveling member moves along a linear transport path. It has, however, been found that only with the linear transport path, an installation space for a machine tool is limited and it is difficult to make the efficient utilization of the floor space available in a factory. Because of this, suggestions have hitherto been made to include at least one curved section in the transport path such as disclosed in, for example, the Patent Documents 2 and 3 listed below.

### [Prior Art Literature]

[Patent Document 1] JP Laid-open Utility Model Publication No. S61-205701
[Patent Document 2] JP Laid-open Patent Publication No. H04-283039
[Patent Document 3] JP Laid-open Patent Publication No. 2010-149269

The conventional unit configuration type machine tool is such that what is unitized is merely limited to mechanism components such as, for example, a feed slide, a headstock and a tool post, and wiring for drive sources such as, for example, motors provided in the units are individually designed and realized for each unit after assemblage. For this reason, a wiring work is complicated and therefore, recombination in the field is difficult to achieve. In particular, even amplifiers or the like for driving the units, which form accessory elements such as a chuck changing device or the like have hitherto been installed on a control panel and, therefore, the wiring considerably varies depending on whether those accessory units are to be installed or whether they should not be installed, resulting in further complication in wiring work.

Also, the conventional unit configuration type processing equipment is such that the conveyance apparatus has not yet been unitized. Thus, where recombination and/or expansion of the machine tool is carried out, a design of the conveyance apparatus suitably employed in the machine tool which has been expanded has been required. Because of it, even though the machine tool is of a unit configuration type, effects of a free property in recombining have not been sufficiently demonstrated. By way of example, a rail employed in the conventional conveyance apparatus of a gantry type or the like is such that a track rail has been formed by processing a square pipe and then installing a linear guide on the processed square pipe. For this reason, once the layout changes, the entire rail need be replaced. However, a quick change in machine tool and/or processing equipment, which are to be installed within the factory, have come to be desired in view of the recent trend of large item small scale production and/or the desire to change products accelerated by product development.

### SUMMARY OF THE INVENTION

In view of the foregoing, the present invention has for its essential object to provide a unit configuration type machine tool, a unit configuration type conveyance apparatus, and a unit configuration type processing equipment, as well as units for the machine tool and travel guide units, in which, including a connecting work of a wiring system, the degree of freedom of recombination and expansion is high and the recombination can be easily and quickly accomplished in the field.

In view of the foregoing, the present invention according to a first aspect thereof provides a unit configuration type machine tool that includes a plurality of mechanism units, in which case each of the mechanism units includes a connecting unit to mechanically connect the other mechanism units or one of component elements of the machine tool with each other, and at least one of the mechanism units are assembly component part of a kind having a movable part and/or a drive source and also having a unit portion wiring and a terminal to connect the unit portion wiring.

According to the first aspect of the present invention, at least one of the mechanism units are assembly component part of a kind having a movable part and/or a drive source and also having a unit portion wiring and a terminal to connect the unit portion wiring. Because of this, the degree of freedom of recombination and expansion, including a connecting work of the wiring system, is high and the recombination can be easily and quickly accomplished in the field. For this reason, it can quickly accommodate a change in processing equipment in dependence on the mixed production. It is to be noted that the term "machine tool" referred to in the description of the present invention made hereinabove and hereinafter should be construed as including not only a narrowly defined machine tool such as, for example, lathe or the like capable of performing a mechanical processing such as, for example, a cutting process, but also a broadly defined machine tool including a sheet metal processing machine such as, for example, a punch press, a laser processing machine and so on.

In the unit configuration type machine tool designed in accordance with the first aspect of the present invention, a base and a plurality of mechanism units are provided, and at least one of the mechanism units are assembly component parts having the movable part and the drive source. The base referred to above includes a plurality of unit installing seats to removably install any one of the mechanism units, a base portion wiring, and terminals on a main control device side and a mechanism unit side that are connected with the base portion wiring. Each of the mechanism units may be of a type that is removably installed on the unit installing seat of the base or on the mechanism unit mounted on the unit installing seat of the base, and having a terminal and a unit portion wiring that are connected with a terminal on the mechanism unit side of the base or a terminal of the unit portion wiring provided in the other mechanism unit.

In the case of the above described construction, at least one of the mechanism units has the unit portion wiring and the terminal thereof. Because of it, when the mechanism unit is recombined, connection between the terminals provided in the base and the mechanism unit makes it possible to complete a wiring work of the machine tool. For this reason, the degree of freedom of recombination and expansion, including a connecting work of the wiring system, is high and the recombination can be easily and quickly accomplished in the field. As a result, it can quickly accommodate a change in processing equipment in dependence on the mixed production. Also, since the use is made of the base on which the mechanism unit is installed and since the base includes the unit installing seat, the base portion wiring and the terminal for that wiring, the recombination can be further easily and further quickly accomplished.

In the unit configuration type machine tool of the type referred to above, at least one of the mechanism units may include a unit built-in control circuit to drive the drive source of the mechanism unit, in which case the unit built-in control circuit is connected with the main control device through the unit portion wiring of the mechanism unit and the base portion wiring of the base. The unit built-in control circuit is a circuit including a control function of a strong current system which includes, for example, an electric motor drive current. Where the unit built-in control circuit to drive the drive source for the mechanism unit is provided in the mechanism unit in this way, there is no need to newly use a drive circuit within the main control device nor to modify the drive circuit within the main control device, and the main control device suffices to have a portion of its program to which a modification is made. For this reason, the recombination and expansion of the machine tool can be further easily and further quickly accomplished.

The present invention in accordance with a second aspect thereof provides a unit configuration type conveyance apparatus to load and unload a work onto and from a machine tool, which includes a guide equipped frame having a travel guide, and a traveling member movable along the travel guide. The traveling member has a holding unit to hold the work and the guide equipped frame is comprised of a plurality of travel guide units connected with each other in a direction conforming to a traveling direction of the traveling member. Since it is constructed by connecting the plurality of the travel guide units, recombination and expansion of the transport path can be easily and quickly accomplished.

The travel guide unit referred to above may include one of an electric component and an electric wiring. Since in this way the travel guides in the conveyance apparatus are unitized and one of the electric component and the electric wiring is provided in each of the travel guide units, the recombination and expansion of the transport path, including an electric system, can be easily and quickly accomplished.

A drive source to cause the traveling member of the conveyance apparatus to move may be a linear motor, in which case the linear motor includes a plurality of armatures on a primary side, that are arranged along the travel guide, and a mover provided in the traveling member, and each of the travel guide units is provided with the armatures and a sensor to detect a position of the mover as the electric component parts. Where in this way the drive source to drive the traveling member is employed in the form of the linear motor, and the armatures and the sensor to detect the position of the mover are provided in the travel guide unit, the recombination and expansion of the transport path, including the drive system, can be easily and quickly accomplished.

Where each of the travel guide units includes an inverter to supply an electric driving power to each of the armatures and a control part to control the armatures by controlling the inverter, the recombination and expansion of the transport path, including the guide, the drive system and the electric system, can be easily and quickly accomplished.

The plurality of the travel guide units may include a travel guide unit which forms a rectilinear section of the travel guide, and a travel guide unit which forms a curved section of the travel guide. If the travel guide unit includes the rectilinear section and the curved section, by a combination of the units, the transport path can be designed to have a path configuration having a free property such as, an L-shape and a ring shape.

The present invention in accordance with a third aspect of thereof provides a unit configuration type processing equipment which includes a machine tool and a conveyance apparatus to load and unload a work relative to the machine tool, in which case the machine tool is a unit configuration type machine tool equipped with a plurality of types of mechanism units. Each of the mechanism units includes a connecting unit to mechanically connect the other mechanism units or one of component elements of the machine tool with each other, and at least one of the mechanism units is an assembly component part of a kind having a movable part and/or a drive source and also having a unit portion wiring and a terminal to connect the unit portion wiring.

According to the unit configuration type processing equipment of the construction referred to above, the machine tool is a unit configuration type machine tool, each of the mechanism units includes a connecting unit to mechanically connect, and at least one of the mechanism units is a assembly component part of a kind having a movable part and/or a drive source and also having a unit portion wiring and a terminal to connect the unit portion wiring. Because of it, with respect to the machine tool, the degree of freedom of recombination and expansion, including a connecting work of the wiring system, can be easily and quickly accomplished. For this reason, it is possible to accommodate a change in processing equipment according to the mixed production.

The unit configuration type processing equipment according the present invention is a processing equipment which includes a machine tool and a conveyance apparatus to load and unload a work relative to the machine tool, in which case the machine tool is a unit configuration type machine tool equipped with a plurality of types of mechanism units, and a base may include a plurality of unit installing seats to removably install any one of the mechanism units, a base portion wiring, and terminals on a main control device side and a mechanism unit side that is connected with the base portion wiring. Each of the mechanism units is of a type that may be removably installed on the unit installing seat of the base or on the mechanism unit mounted on the unit installing seat of the base, and having a terminal and a unit portion wiring that are connected with a terminal on the mechanism unit side of the base or a terminal of the unit portion wiring provided in the other mechanism unit.

In the case of the construction described above, the machine tool is a unit configuration type machine tool and at least one of the mechanism units has a unit portion wiring and a terminal thereof. Because of it, when the mechanism unit is recombined, the wiring work of the machine tool completes when connection is made between terminals provided in the base and the mechanism units. For this reason, the degree of freedom of recombination and expansion, including the connecting work of the wiring system, is high and the recombination and expansion in the field can be easily and quickly accomplished. As a result, it is possible to quickly accommodate any change in processing equipment according to the mixed production. Also, the unit configuration type machine tool has the base on which the mechanism units are installed, and this base has the unit installing seats, the base portion wiring and the terminal for that wiring. Accordingly, the recombination can be further easily and further quickly accomplished.

The different unit configuration type processing equipment of the present invention may be a processing equipment which includes a machine tool and a conveyance apparatus to load and unload a work relative to the machine tool, in which case the conveyance apparatus is a unit configuration type conveyance apparatus including a guide equipped frame having a travel guide, and a traveling member movable along the travel guide. The traveling member has a holding unit to hold the work and the guide equipped frame is comprised of a plurality of travel guide units connected with each other in a direction conforming to a traveling direction of the traveling member. In the case of the construction described above, since the conveyance apparatus is the unit configuration type conveyance apparatus assembled by connecting the plurality of travel guide units, recombination and expansion of the transport path can be easily and quickly accomplished and it is also possible to quickly accommodate any change in installing position and in form of the machine tool.

The travel guide unit may include one of an electric component and an electric wiring. In this case, the recombination and expansion of the transport path, including the installation of the electric component and the electric wiring work, can be easily and quickly accomplished.

The unit configuration processing equipment of the present invention may be a processing equipment which includes a machine tool and a conveyance apparatus to load and unload a work relative to the machine tool, in which case the machine tool is a unit configuration type machine tool equipped with a plurality of types of mechanism units. Each of the mechanism units includes a connecting unit to mechanically connect the other mechanism units or one of component elements of the machine tool with each other, and at least one of the mechanism units is a assembly component part of a kind having a movable part and/or a drive source and also having a unit portion wiring and a terminal to connect the unit portion wiring. The conveyance apparatus is a unit configuration type conveyance apparatus including a guide equipped frame having a travel guide, and a traveling member movable along the travel guide. The traveling member has a holding unit to hold the work and the guide equipped frame is comprised of a plurality of travel guide unit connected with each other in a direction conforming to a traveling direction of the traveling member.

In the case where both of the machine tool and the conveyance apparatus are made to be a unit configuration type, the degree of freedom of change in form of the processing equipment can be further increased. Also, since some of the mechanism units of the machine tool have the unit portion wiring and the terminal thereof, the degree of freedom of recombination and expansion, including the connecting work of the wiring system, can be enhanced and the recombination can be easily and quickly accomplished in the field. Even with the conveyance apparatus, since it is constituted by connecting the travel guide units, a recombining work and an expanding work can be easily and quickly performed. Because of it, it is possible to quickly accommodate a moderate change in processing equipment according to the mixed production.

The unit configuration type processing equipment of the present invention may be a processing equipment which includes a machine tool and a conveyance apparatus to load and unload a work relative to the machine tool, in which case the machine tool is a unit configuration type machine tool including a base and a plurality of types of mechanism units, and at least one of the mechanism units is an assembly component part of a kind having a movable part and/or a drive source. The base referred to above includes a plurality of unit installing seats to removebly install any one of the mechanism units, a base portion wiring and terminals on a main control device side and a mechanism unit side that is connected with the base portion wiring. Each of the mechanism units is removably installed on the unit installing seat in the base or removably mounted on a mechanism unit installed on the unit installing seat of the base and includes a terminal and a unit portion wiring that are connected with the terminal of the unit portion wiring connected with the terminal on the mechanism unit side of the base or a terminal of the unit portion wiring provided in the other mechanism unit.

Even in the case of the construction described above, since both of the machine tool and the conveyance apparatus are designed to be of a unit configuration type, the degree of freedom of change in form of the processing apparatus can increase further. Also, some of the mechanism units of the machine tool include the unit portion wiring and the terminal thereof, the degree of freedom of recombination and expansion, including the connecting work of the wiring system, can be enhanced and the recombination and expansion can be easily and quickly accomplished in the field. In addition, the unit configuration type machine tool includes the base on which the mechanism units are installed and the base in turn includes a unit installing seat, a base portion wiring, and a terminal for the wiring. Therefore, the recombination can be further easily and further quickly accomplished. Even with the conveyance apparatus, since it is constructed by connecting the travel guide units, the recombination and expansion can be easily and quickly accomplished. For this reason, it is possible to quickly accommodate a moderate change in processing equipment according to the mixed production.

Where at least one of the various mechanism units of the machine tool includes the unit built-in control circuit to drive the drive source of the mechanism unit and this unit built-in control circuit is connected with the main control device through the unit portion wiring and terminal of the mechanism unit and the base portion wiring and terminal of the base, for the purpose of the recombination or the like there is no need to use a new drive circuit within the main control device nor to modify the drive circuit within the main control device and the main control device may work satisfactorily if the program used therein is partially modified. For this reason, the recombination and expansion of the machine tool can be further easily and further quickly accomplished.

Where each of the travel guide units includes one of the electric component and the electric wiring, the recombination and expansion of the transport path, including the electric system, can be easily and quickly accomplished. Where the drive source to drive the traveling member of the conveyance apparatus is in the form of a linear motor and includes a plurality of the armatures on the primary side, which are arranged along the travel guide, and a mover provided in the traveling member, in which case each of the travel guide units is provided with the electric element and a sensor to detect a position of the mover, the recombination and expansion of the transport path, including the drive system, can be easily and quickly accomplished.

Where each of the travel guide units includes an inverter to supply an electric driving power to each of the armatures and a control part to control the armatures by controlling the inverter, the recombination and expansion of the transport path, including the guide, the drive system and the electric system, can be easily and quickly accomplished.

Where the plurality of the travel guide units include a travel guide unit which forms the rectilinear section of the travel guide, and the travel guide unit which forms the curved section of the travel guide, by the combination of the units the transport path can be shaped to represent any desired path shape such as, for example, an L-shape or a ring shape.

The present invention in accordance with a fourth aspect thereof provides a mechanism unit for a machine tool that includes an assembly component having a movable part and a drive source, which mechanism unit includes a terminal and a unit portion wiring, adapted to be connected either with a terminal of the base on the mechanism unit side or with a terminal of a unit portion wiring provided in a mechanism unit on a low stage side, and a unit built-in control circuit to drive the drive source. Because of the mechanism unit so constructed as described above, the degree of freedom of recombination and expansion, including a connecting work of the wiring system, is high and the recombination can be easily and quickly accomplished in the field. In addition, any change in control system can also be accomplished quickly.

The present invention in accordance with a fifth aspect thereof provides a travel guide unit for a unit configuration type conveyance apparatus, which includes a travel guide section forming a part of a lengthwise direction of the travel guide, a frame portion having the travel guide section installed therein, an armature installed in the frame portion, a mover provided in the traveling member, and a sensor installed in the frame portion to detect a position of the mover. According to this travel guide unit of the structure described above, the recombination and expansion of the travel path can be easily and quickly accomplished.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1A is an explanatory diagram showing a conceptual structure of a unit configuration type processing equipment designed in accordance with a preferred embodiment of the present invention;
Fig. 1B is a perspective view of a machine tool employed in the processing equipment shown in Fig. 1A;
Fig. 2 is a perspective view showing one example of a combined form of the unit configuration type processing equipment;
Fig. 3 is a perspective view showing various examples of groups of a base and units in the unit configuration type machine tool employed in the processing equipment;
Fig. 4 is a perspective view showing one example of the combined form of the unit configuration type processing equipment;
Fig. 5 is a perspective view showing one example of a mechanism unit of the machine tool;
Fig. 6 is a perspective view showing a different example of the mechanism unit of the machine tool;
Fig. 7A is a perspective view showing one example of a tool head of the machine tool;
Fig. 7B is a perspective view showing another example of the tool head of the machine tool;
Fig. 7C is a perspective view showing a further example of the tool head of the machine tool:
Fig. 8A is a perspective view showing a travel guide unit, which will become a rectilinear section of a conveyance apparatus used in the unit configuration type processing equipment;
Fig 8B is a perspective view showing a travel guide unit, which will become a curved section of the conveyance apparatus;
Fig. 8C is a perspective view showing a traveling member of the conveyance apparatus;
Fig. 9A is a top plan view showing an example of the travel guide unit that is rectilinear;
Fig. 9B is a front elevational view of the travel guide unit of Fig. 9A;
Fig. 9C is a horizontal sectional view of the travel guide unit of Fig. 9A;
Fig. 10A is a top plan view showing an example of the travel guide unit that is curved;
Fig. 10B is a front elevational view of the travel guide unit of Fig. 10A;
Fig. 10C is a horizontal sectional view of the travel guide unit of Fig. 10A;
Fig. 11 is a block diagram showing a conceptual construction of a control system for the unit configuration type processing equipment;
Fig. 12 is an explanatory diagram comprised of a perspective view, which shows a machine part of the unit configuration type processing equipment, and a block diagram showing a conceptual construction of the control system;
Fig. 13 is a block diagram showing explanatory details of the conceptual construction of the control system used in the unit configuration type processing equipment;
Fig. 14 is a perspective view showing another example of the combined form of the unit configuration type processing equipment;
Figs. 15A and 15B are perspective views showing a different example of the unit configuration type processing equipment;
Figs. 16A to 16F are perspective views showing a still different example of the unit configuration type processing equipment;
Fig. 17 is a top plan view showing one example of a combined form of a guide equipped frame used in the conveyance apparatus:
Fig. 18 is a front elevational view showing one example of the form of the guide equipped frame;
Fig. 19 is a top plan view showing the relation between a travel guide of the guide equipped frame and the traveling member;
Fig. 20 is a top plan view showing the relation between the guide equipped frame, a linear motor and the traveling member;
Fig. 21 is a fragmentary front elevational view, with a portion omitted, showing one example of a combined form of the unit configuration type processing equipment;
Fig. 22 is a side view, with a portion broken away, showing the conveyance apparatus;
Fig. 23A is a top plan view showing the traveling member used in the conveyance apparatus;
Fig. 23B is a front elevational view of the traveling member;
Fig. 23C is a bottom plan view of the traveling member;
Fig. 23D is a rear view of the traveling member;
Fig. 24 is a transverse sectional view showing the travel guide and the traveling member both in the conveyance apparatus;
Fig. 25 is a sectional view showing a portion of Fig. 22 on an enlarged scale;
Fig. 26 is a fragmentary sectional view showing the linear motor;
Fig. 27 is a top plan view showing an individual motor forming a part of the linear motor;
Fig. 28 is a top plan view showing an arrangement of the individual motor forming respective parts of the linear motor;
Fig. 29 is a sectional view showing the relation between the linear motor and a sensor;
Fig. 30 is a block diagram showing a drive system for the linear motor; and
Figs. 31A and 31B are top plan view showing another example of a combined form of the guide equipped frame employed in the conveyance apparatus.

### DESCRIPTION OF PREFERRED EMBODIMENTS

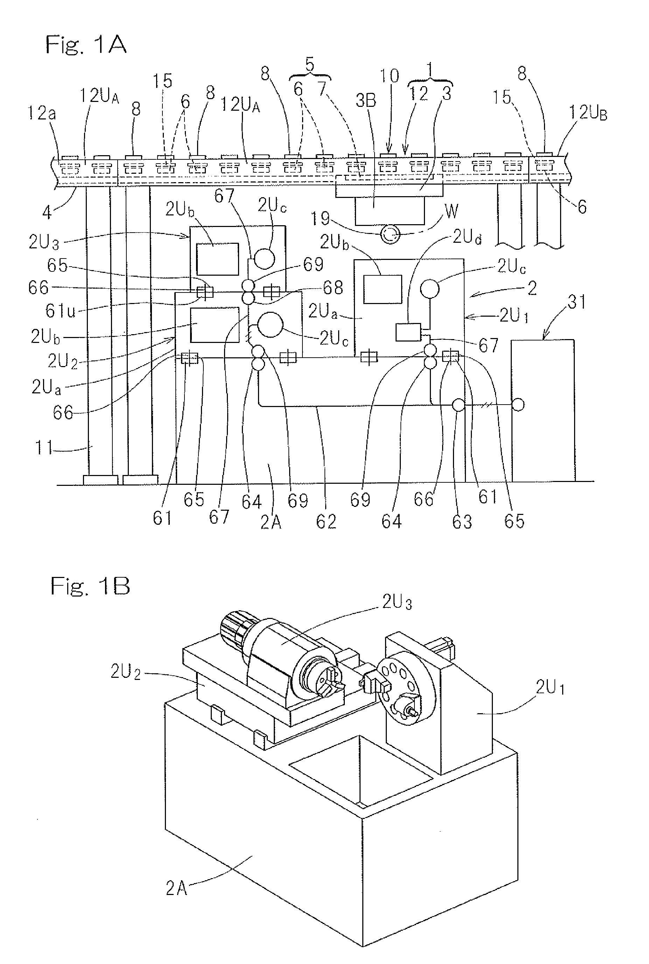

One preferred embodiment of the present invention will be described in detail with particular reference to Figs. 1A and 1B to Fig. 30. Fig. 1A illustrates a conceptual construction of a unit configuration type processing equipment according to the embodiment and Fig. 1B shows a specific example of a tool machine used in this unit configuration type processing equipment. Referring particularly to Fig. 1A, the unit configuration type processing equipment is comprised of a machine tool 2 and a conveyance apparatus 1 to load and unload a workpiece or work W to and from the machine tool 2.

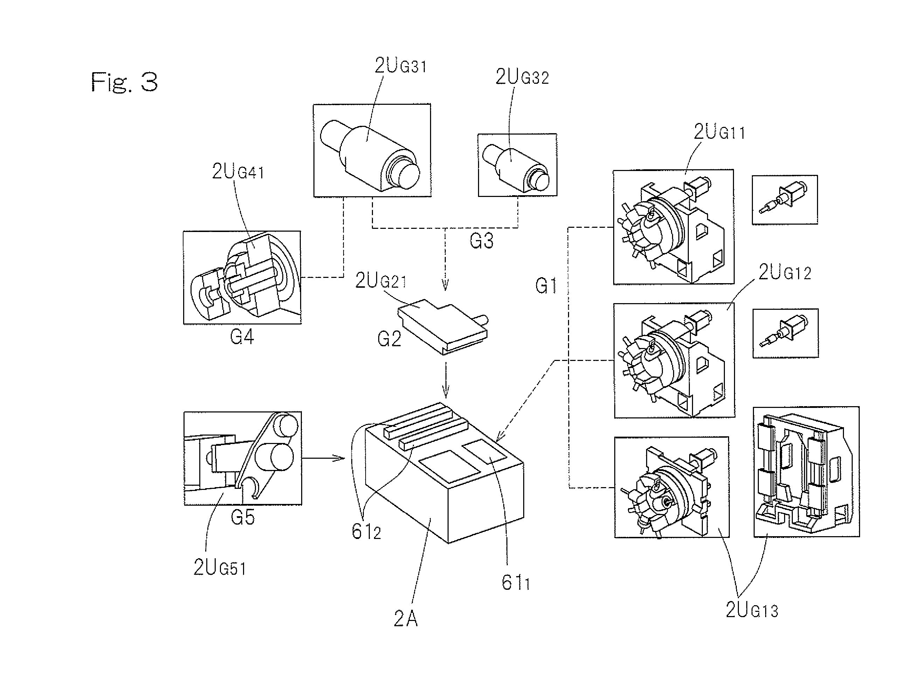

The machine tool 2 is a unit configuration type machine tool and includes a base 2A, a plurality of types of mechanism units 2U (2U₁, 2U₂ and 2U₃). Any of those mechanism units 2U are replaceable with other mechanism units 2U that are prepared outside the machine as will be described in detail with particular reference to Fig. 3 and others. As shown in Fig. 1A, each of the mechanism units 2U is an assembled component including a unit main body 2Ua, a movable part 2Ub movable relative to the unit main body 2Ua, and a drive source 2Uc to actuate the movable part 2Ub.

The base 2A is an element that will become a bed or a base frame or the like, and includes a plurality of unit installing seats 61 to receive any mechanism unit 2U replaceably installed thereon, a base portion wiring 62, and terminals 63 and 64 of a main control device 31 side and the mechanism unit 2U connected with the base portion wiring 62, respectively. Each of the unit installing seats 61 has a portion, which forms a seat to replaceably install the mechanism unit 2U thereon, and a mounting hole (not shown). It is to be noted that the unit installing seat 61 may be a rail for guiding purpose.

Each of the mechanism units 2U is an element having a particular actuating function of a tool post, a feed slide, a headstock and others in the machine tool, and is replaceably installed on the unit installing seat 61 of the base 2A or on the mechanism unit 2U installed on the unit installing seat 61 of the base 2A. In the example as shown in Fig. 1B, the mechanism units 2U₁ and 2U₂ are installed on the base 2A and the mechanism unit 2U₃ is installed on the mechanism unit 2U₂. Each of the mechanism units 2U has an installing portion 65 adapted to be installed on the unit installing seat 61, and the unit installing seat 61 and the installing portion 65 are connected together by means of a connecting element 66 such as, for example, a bolt or the like.

One of the mechanism units 2U, on which a different mechanism unit 2U may possibly be installed, is provided with a unit installing seat 61U on an upper surface thereof. The mechanism unit 2U that is installed on the other mechanism unit 2U is installed on the unit installing seat 61 through the installing portion 65 thereof and connected therewith by means of the connecting element 66. In other words, the unit installing seats 61, 61u, the installing portion 65 and the connecting element 66 cooperate with each other to define a connecting unit.

Although the base 2A and each of the unit installing seats 61, 61u of the mechanism unit 2U are available in a plurality of types, they are standardized to the dimension and the shape that are predetermined for each of groups, and the installing portion 65 of each of the mechanism units 2U is standardized to the dimension and the shape, that are enough to accommodate the base 2A and the unit installing seats 61 and 61u of the mechanism unit 2U for each of the groups. Accordingly, replacement of the mechanism units 2U within the group is made possible.

Each of the mechanism units 2U has a unit portion wiring 67. Also, each of the mechanism units 2U is connected with a terminal 64 of the base 2A on a mechanism unit side via the unit portion wiring 67 or has a terminal 69 that is connected with a terminal 68 on a front end side of the unit portion wiring 67 in the other mechanism unit side 2U on a lower stage side on a base end side thereof. The unit portion wiring 67 is connected with a drive source 2Uc of the mechanism unit side 2U on a base end side thereof. Also, the unit portion wiring 67 of the mechanism unit 2U, with which the other mechanism unit 2U in the next stage thereof is possibly connected, have a wiring relative to the drive source 2Ub possessed by itself and a wiring to connect with the other mechanism unit 2U in the next stage.

At least one of the mechanism units 2U forming respective parts of the machine tool 2 has a unit built-in control circuit 2Ud to drive the drive source 2Ub of this mechanism unit 2U. In the example as shown in Fig. 1A, the mechanism unit 2U₁ has the unit built-in control circuit 2Ud. This unit built-in control circuit 2Ud is connected with the main control device 31 through the unit portion wiring 67 of the mechanism unit 2U and the base portion wiring 62 of the base 2A.

Although the base portion wiring 62 and the unit portion wiring 67 are assumed to be one in number in Fig. 1A for the sake of brevity, each of the base portion wiring 62 and the unit portion wiring 67 includes a signal wiring and an electric power wiring. The signal wiring may have a plurality of types of standard wirings laid in. In dependence on the signal wiring and the electric power signal, the various terminals 63, 64, 68 and 69 are also available for the signal wiring and for the electric power wiring. Each of those terminals 63, 64, 68 and 69 is in the form of a plug-in connection type male side or female side connector or the like, and is connected either directly or through a flexible wiring. It is to be noted that the base portion wiring 62 and the unit portion wiring 67 may be bundled together or, alternatively, laid at different positions.

Even with respect to the terminals 63, 64, 68 and 49, the signal wiring and the electric power wiring may be laid at the same position or, alternatively, laid at different positions. It is to be noted that the signal wiring of the base portion wirings 62 is connected with the main control device 31, and the electric power wiring thereof may be connected with a commercial alternating current source available at a position different from the main control device 31.

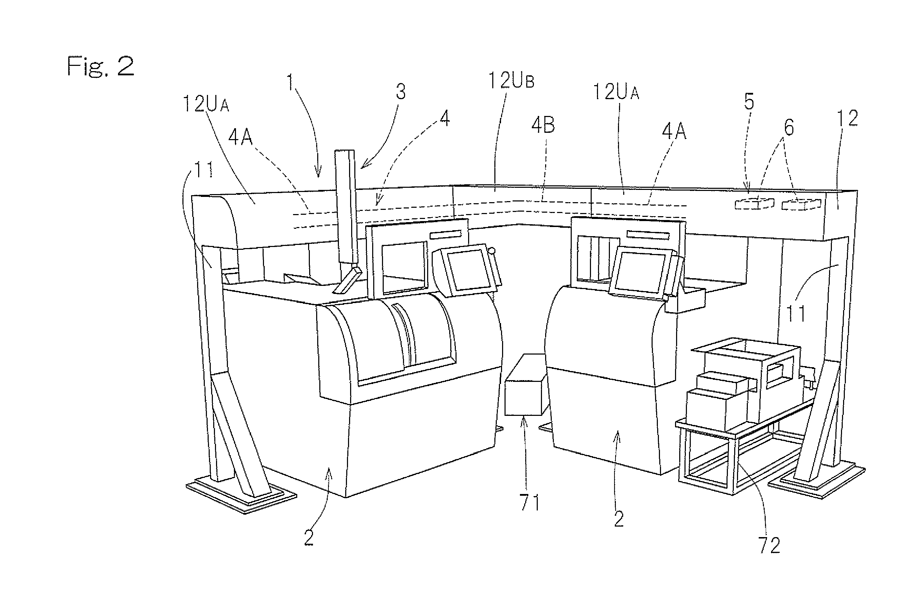

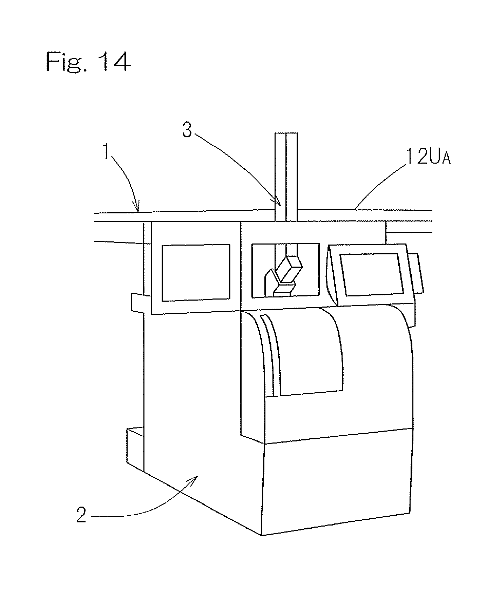

Fig. 2 illustrates an example in which for two machine tools 2 of the unit configuration type, one conveyance apparatus 1 of the unit configuration type is installed. The machine tools 2 are shown in a condition with machine covering provided therein. A combination of the machine tool 2 and the conveyance apparatus 1 can be available in various forms as will be described in detail with particular reference to Fig. 14 to Figs. 16A to 16F.

Fig. 3 illustrates an example of a group of the mechanism units 2U.
An arbitrarily chosen mechanism unit 2U of the group G1 can be selectively installed on a first unit installing seat 61₁ of the base 2A. For the mechanism unit 2U of the group G1, a mechanism unit 2U_{G11} of a standard turret, a mechanism unit 2U_{G12} of a rotary tool turret, and a mechanism unit 2U_{G13} equipped with an Y-axis function can be selectively installed. A second unit installing seat 61₂ of the base 2A is in the form of a guide rail and a mechanism unit 2U_{G21} of the group G2 is installed on the guide rail. The mechanism unit 2U_{G21} is in the form of a cross slide device (XZ slide), which is a feed slide device that enables movement in two axis directions perpendicular to each other. So far shown therein, the mechanism unit 2U_{G21} is shown as available in one type, but a plurality of the mechanism units may be prepared so that one of them can be arbitrarily chosen for replacement.

On the cross slide device which is the mechanism unit 2U_{G21} of the group G2, an arbitrarily chosen mechanism unit 2U of the group G3 can be selectively installed. The mechanism units 2U of the group G3 includes a mechanism unit 2U_{G31}, which forms a headstock device for a high rigidity, and a mechanism unit 2U_{G32} which forms a headstock device for a high speed. To the mechanism units 2U_{G31} and 2U_{G32} of the group 3, the mechanism unit 2U of the group G4 is mountable. As the mechanism unit 2U of the group G4, in the instance as shown, a mechanism unit 2U_{G41} forming an automatic chuck changing or replacing main shaft to replace a chuck on a main shaft in a work holding condition is made available. This mechanism unit 2U_{G41} forming the automatic chuck changing main shaft is mounted as desired.

Other than that, a mechanism unit 2U_{G51} of a chuck changing device is mountable on the unit installing seat (not shown) of the base 2A as the mechanism unit 2U of the group G5. The mechanism unit 2U_{G51} of the chuck changing device is operable to replace the chuck in the mechanism unit 2U_{G41} of the automatic chuck changing main shaft.

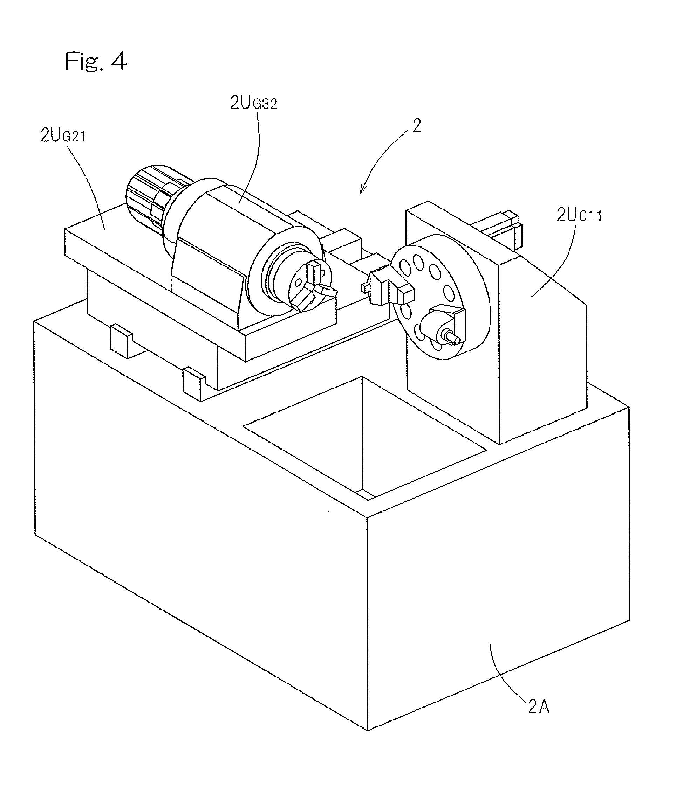

One example of the machine tool 2 constructed with the use of the mechanism units 2U shown in Fig. 3 is shown in Fig. 4. The machine tool 2 shown in Fig 4 is an example in which the mechanism unit 2U_{G11} of the standard turret and the mechanism unit 2U_{G21} comprised of the XZ slide are installed on the base 2A shown in Fig. 3, and the mechanism unit 2U_{G32}, which forms the high speed headstock device, is installed on the mechanism unit 2U_{G21} comprised of the XZ slide. This machine tool 2 forms a lathe of a main shaft moving type. Fitting a machine covering to a main body of the machine tool so assembled in the manner described above results in one machine tool 2.

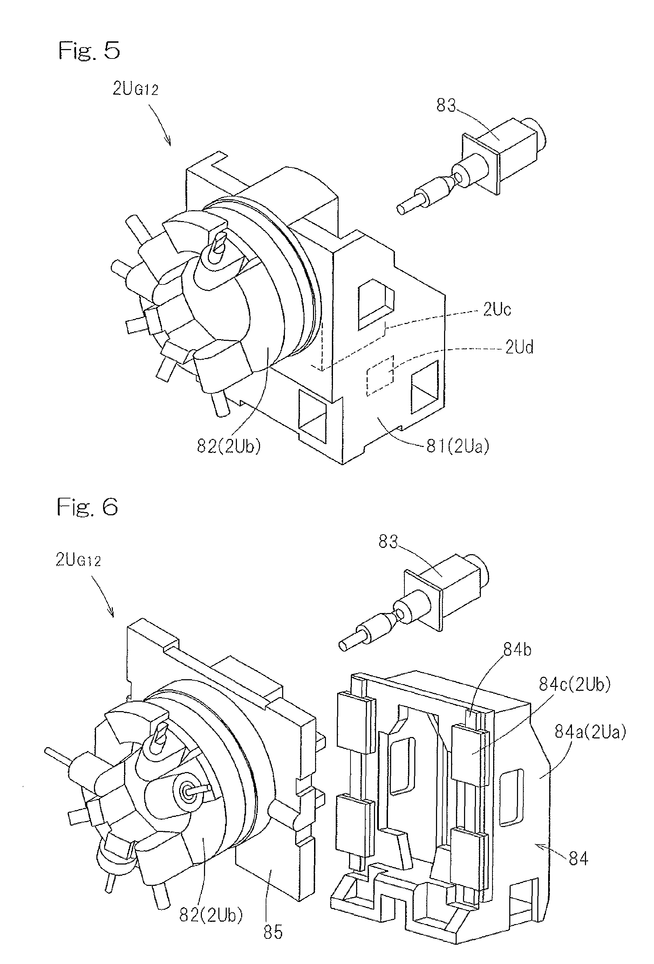

Fig. 5 illustrates a specific example of the mechanism unit 2U_{G12} of the rotary tool turret. This mechanism unit 2U_{G12} is assembled by mounting a turret 82, which is a tool post forming a movable part 2Ub, on a turret support 81 which is a unit main body 2Ua (shown in Fig. 1A), so that the turret 82 can be rotated for indexing and then by mounting a rotary tool 83 on the turret 82. In this figure, the rotary tool 83 is shown as removed from the turret 82. The turret support 81 has installed thereon the drive source 2Uc (best shown in Fig 1A) to drive the turret 82 to turn, and also has the unit built-in control circuit 2Ud (also best shown in Fig. 1A) built therein.

Fig. 6 illustrates a specific example of the mechanism unit 2U_{G13} equipped with a Y-axis function. In this example, a lifter unit 85 having the turret 82 mounted thereon is installed on a lifter support device 84. The lifter support device 84 is of a type in which a lifter 84c is installed on the lifter support device main body 84a, which is the unit main body 2Ua (best shown in Fig. 1A), through a lifter rail 64b, so that the lifter 84c can be selectively ascended or descended, and the drive source 2Uc (best shown in Fig. 1A) to drive the lifter 84c to selectively ascend and descend is installed. The lifter 84c and the turret 82 form the movable part 2Ub (best shown in Fig. 1A) in the mechanism unit 2U. Also, in this example, the drive source 2Uc of the mechanism unit 2U includes the drive source to selectively ascend or descend the lifter 84c and the drive source to turn the turret 82. The lifter support device main body 84a has the unit built-in control circuit 2Ud (best shown in Fig. 1A) built therein. It is to be noted that the turret 82 shown in Figs. 5 and 6 is, for example, a decagonal turret.

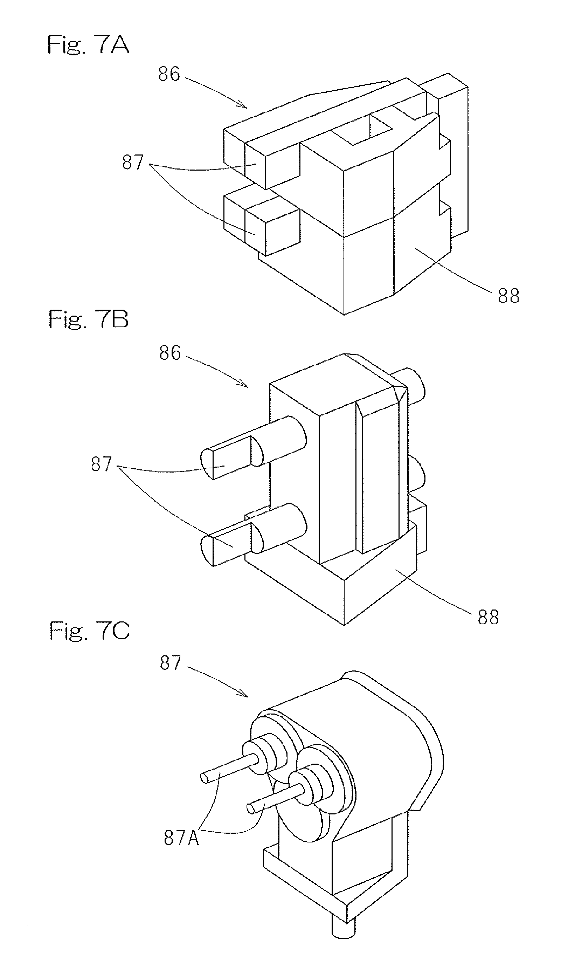

Figs. 7A to 7C illustrate various examples of tool heads 86 that are installed on the turret 82 shown in Figs. 5 and 6. In the example shown in Fig. 7A, a tool 87 comprised of two turning blades for an outer diameter processing are fitted to a common tool holder 88 in a fashion parallel to each other. In the tool head 86 of Fig. 7B, the tool 87, comprised of two turning blades for an inner diameter processing, is fitted to the common tool holder 88 in a fashion parallel to each other. In the tool head 86 shown in Fig. 7C, two rotary tools 87A are fitted to the common tool holder 88 in a fashion parallel to each other. Each of those tool heads 86 has the tool holder 88 that is fitted to the turret 82 best shown in Figs. 5 and 6. Where those tool heads 86 are used, it is designed to have the two tools, and therefore, an initial setup replacement can be reduced.

Referring to Fig. 1A, the conveyance apparatus 1 includes a guide equipped frame 12, having a travel guide 4 disposed on a frame 12a, and a traveling member 3 movable along the travel guide 4. The traveling member 3 is provided with a traveling member mounting mechanism 3B having the chuck 19 that serves as a holding unit for the work. The guide equipped frame 12 referred to is made up of a plurality of travel guide units 12U (12U_{A} and 12U_{B}) connected with each other so as to line up in a direction parallel to a traveling direction of the traveling member 3. The travel guide unit 12U is of a type in which the travel guide 4 and the frame 12a having this travel guide 4 mounted thereon are divided into a plurality of pieces in a direction lengthwise thereof, and electric components and electric wirings installed on the frame 12a are too divided for each of the travel guide units 12U. It is to be noted that a portion of each of the travel guide units 12U on the frame 12a is referred to as a frame part 12aa.

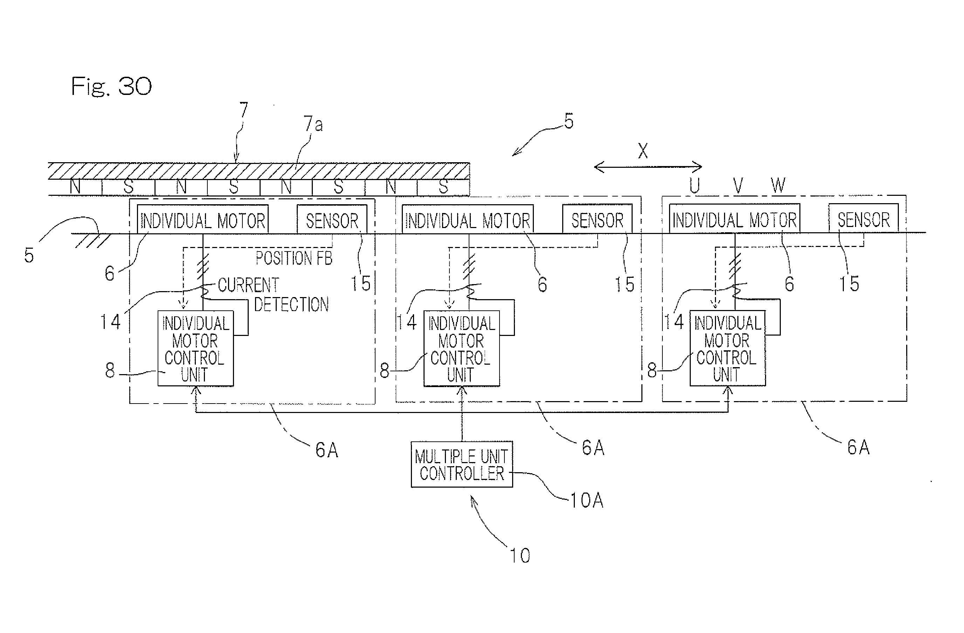

A drive source to drive the traveling member 3 is a linear motor 5 of a synchronous type comprised of a plurality of individual motors 6 which are armatures on a primary side arranged along the travel guide 4, a mover 7 provided in the traveling member 3. The individual motors 6 are spacedly arranged relative to each other. Each of the travel guide units 12U is provided with the individual motors 6 and sensors 15 to detect the position of the mover 7 as electric component parts. The sensor 15 is in the form of linear sensors and is provided for each of the individual motors 6. A travel control unit 10, which is a control unit for the linear motor 5, is made up of a single multiple unit controller 10A (best shown in Fig. 30) described in detail later, and an individual motor control unit 8 mounted on each of the individual motors 6, as shown in Fig. 1A, to control the corresponding individual motor 6. Each of the individual motor control units 8 includes an inverter and a control part to control the corresponding individual motor 6 by controlling the inverter, and is installed on the frame 12a having been positioned in the vicinity of the associated individual motor 6.

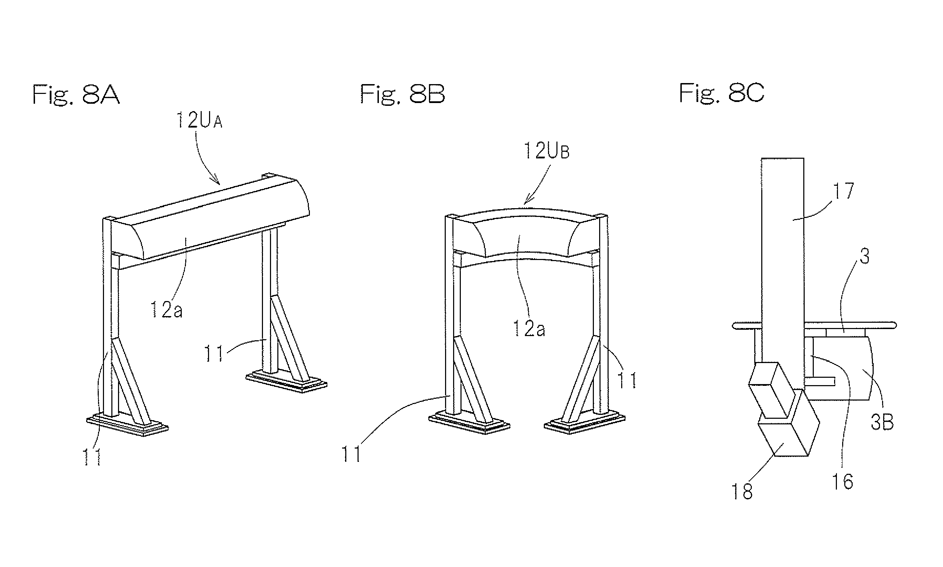

As shown in Figs. 8A to 8C, the travel guide unit 12U includes a travel guide unit 12U_{A} which forms a rectilinear part of the guide equipped frame 12, and a travel guide unit 12U_{B} which forms a curved part thereof. Those travel guide units 12U_{A} and 12U_{B} can be sequentially connected in an arbitrary combination. Although each of those travel guide units 12U_{A} and 12U_{B} has pillars 11 at opposite ends thereof, pillars 11 at sites that continue to each other may be omitted. Where they are omitted, the travel guide unit 12U having a pillar 11 at one end thereof may be prepared or, alternatively, the pillar 11 at one end may be removed from the travel guide unit 12 having the pillars 11 at the opposite ends thereof.

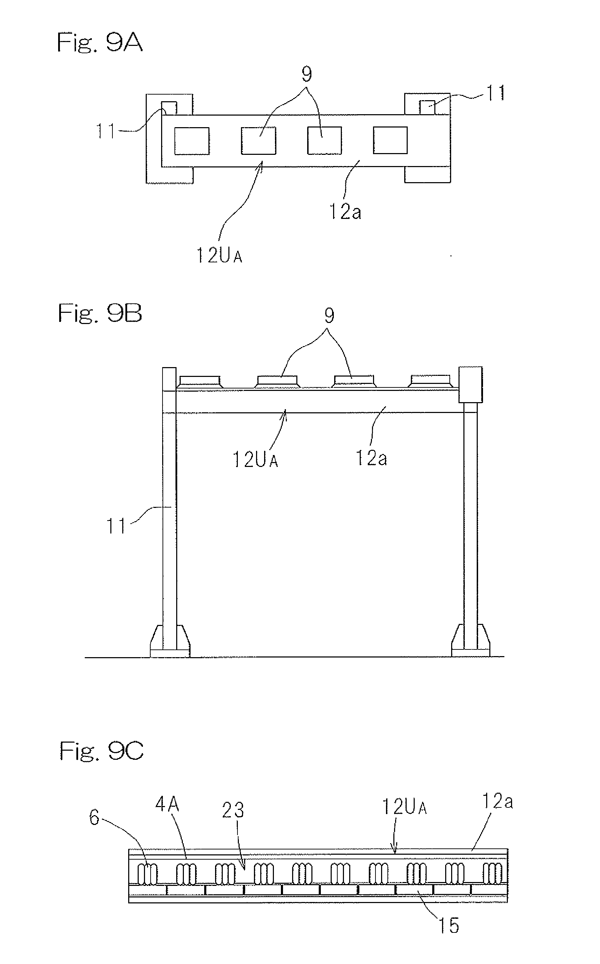

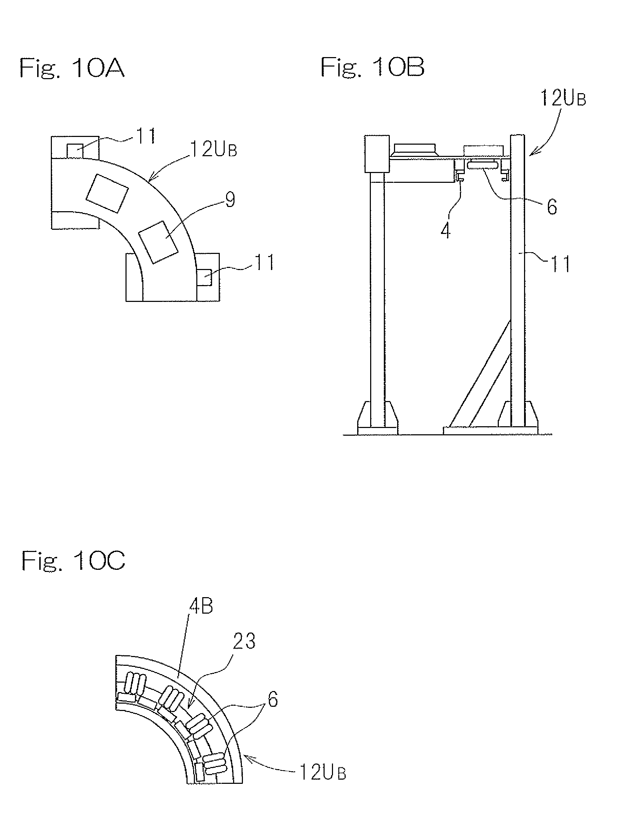

Figs. 9A to 9C shows the travel guide unit 12U_{A} which form the rectilinear part, as viewed in various directions and in section, and Figs. 10A to 10C show the travel guide unit 12U_{B} which will form the curved part, as viewed in various directions and in section. Each of those travel guide units 12U_{A} and 12U_{B} is such that the individual motor control units 8, put together into a neighboring group, are mounted on a common circuit substrate to define a single motor drive circuit part 9. Each of the individual motor control units 8 is connected with the wiring (not shown) provided in each of the travel guide unit 12 and is provided with terminals (not shown) at opposite ends of such travel guide unit 12 for that wiring.

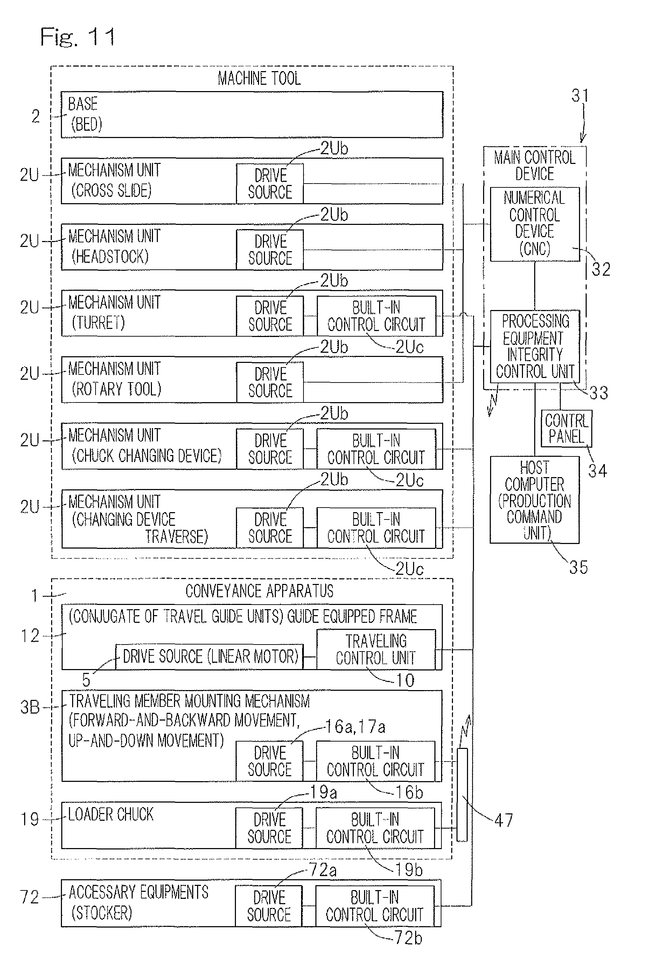

Fig. 11 illustrates a block diagram showing the relation in wiring of the control system in the unit configuration type processing equipment. The main control device 31 referred to previously includes a computer numerical control device 32 and a computerized processing equipment integrity control unit 33, and the processing equipment integrity control unit 33 and a host computer 35 are connected with each other. The processing equipment integrity control unit 33 and the numerical control device 32 may be either disposed spaced from each other or provided within the same housing or in the same control panel. The processing equipment integrity control unit 33 referred to above is operable to control the unit configuration type processing equipment in its entirety, and is mainly operable to perform a sequence control. The processing equipment integrity control unit 33 is comprised of a programmable controller or the like.

The processing equipment integrity control unit 33 has a function of controlling the machine tool 2 and a function of controlling the conveyance apparatus 1 and accessory equipments 72 and, of the controls of the machine tool 2, the numerical control is carried out by the numerical control device 32. The host computer 35 referred to above is operable to perform a production management and is connected with the processing equipment integrity control unit 33 through a local area network (LAN) or the like so as to provide the processing equipment integrity control unit 33 with a production command such as, for example, a production schedule or the like.

Of the mechanism units 2U of the machine tool 2, a mechanism unit 2U that requires a shaft moving control by means of a feedback control such as, for example, a mechanism unit 2U forming a cross slide device, a mechanism unit 2U forming a headstock and a mechanism unit 2U forming a rotary tool, in the instance as shown, has no built-in control circuit 2Uc built therein and the drive sources 2Ub therefor are connected with the numerical control device 32 so that they can be directly controlled by the numerical control device 32.

Of the mechanism units 2U of the machine tool 2, the mechanism unit 2U driven by the sequence control has the built-in control circuit 2Uc built therein such that with a command of the processing equipment integrity control unit 33 given to the built-in control circuit 2Uc, the control of the drive source 2Ub within the mechanism unit 2U can be performed by the built-in control circuit 2Uc. Accordingly, where the mechanism unit 2U is recombined with a different type, the processing equipment integrity control unit 33 sends a simple control signal such as, for example, an ON/OFF signal, and the detailed control is carried out by the built-in control circuit 2Uc. Wirings for the transmission of those signals are carried out through the base portion wiring 62, the unit portion wiring 67 and their related terminals 64, 68 and 69, all of which have been previously described with particular reference to Fig. 1A.

Regarding the conveyance apparatus 1, various portions have respective control units built therein, each of which units is operable in response to a corresponding command of the processing equipment integrity control unit 33 to cause the respective drive source to be controlled by the control unit built therein. In other words, the guide equipped frame 12, which is a conjugation of the travel guide units, has a travel control unit 10 to drive the linear motor 5 which is a drive source for traveling. The traveling member mounting mechanism 3B includes drive sources 16a and 17a (only one of which is representatively shown in Fig. 11) to move in the anteroposterior direction and elevating direction, respectively, and is provided with a built-in control circuit 16b. A loader chuck 19 has a drive source 19a to selectively open and close, and is provided with a built-in control circuit 19b. In response to commands of the processing equipment integrity control unit 33, traveling control of the linear motor 5 is performed through the built-in travel control unit 10, controls of the various drive sources 16a and 17a of the traveling member mounting mechanism 3B are performed through the built-in control circuit 16b, and control of the drive sources 19a of the loader chuck 19 is performed through the built-in control circuit 19b.

Even in the accessory device 72 such as, for example, a stocker, there is provided a built-in control circuit 72b to control a drive source 72a, which drive source 72a is controlled through the built-in control circuit 72b in accordance with a command of the processing equipment integrity control unit 33. Transmission of signal to the respective built-in control circuits 16b and 19b of the traveling member mounting mechanism 3B and the loader chuck 19 is accomplished through a wireless local area network from the processing equipment integrity control unit 33 or the control panel 34.

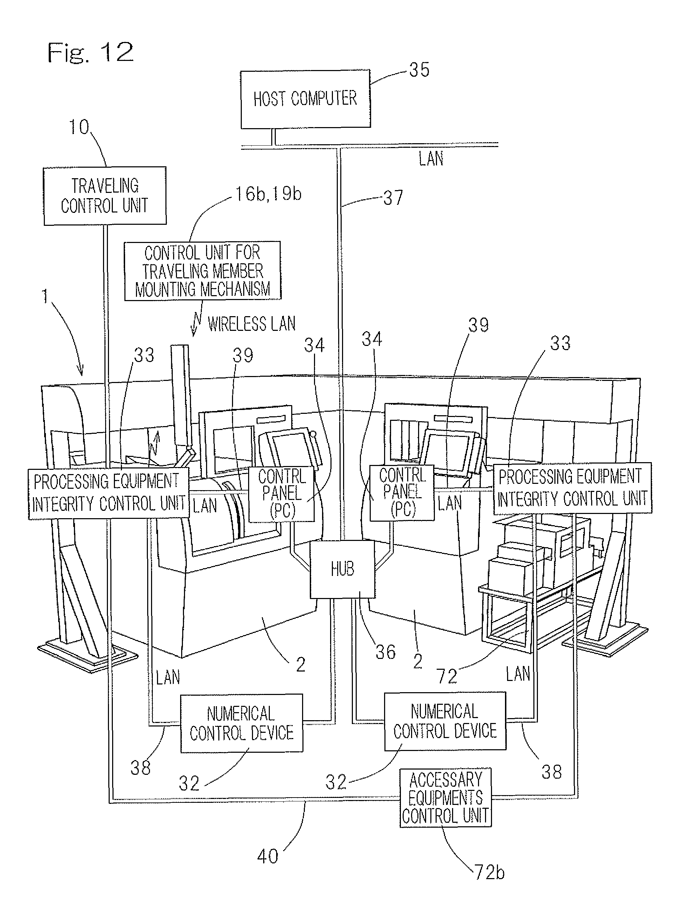

Fig. 12 illustrates an explanatory diagram including a perspective view of a mechanical portion of the unit configuration type processing equipment and a block diagram of a control system. In this example, one conveyance apparatus 1 is combined with two machine tools 2.

The processing equipment integrity control unit 33 provided for each of the machine tool 2 is connected with the numerical control device 32 and the control panel 34 through LANs 38 and 39. A local area network capable of performing a high speed communication effective to obtain a real-time property is used for the local area network (LAN) 39 that is used to connect between the processing equipment integrity control unit 33 and the numerical control device 32. The processing equipment integrity control unit 33 and the numerical control device 32 may be either arranged spaced a distance from each other or provided within the same housing or control panel. The host computer 35 is connected with the control panel 34 and the numerical control device 32 of each of the machine tools 2 through a local area network 37 and a hub 36. Each of the control panels 34 includes a computer such as, for example, a personal computer or the like, an image display device such as, for example, a liquid crystal display device or the like, and an input key. The processing equipment integrity control unit 33 and the built-in control circuit 72b, which forms an accessory control unit, are connected with each other through a controller area network (CAN) communication linkage 40.

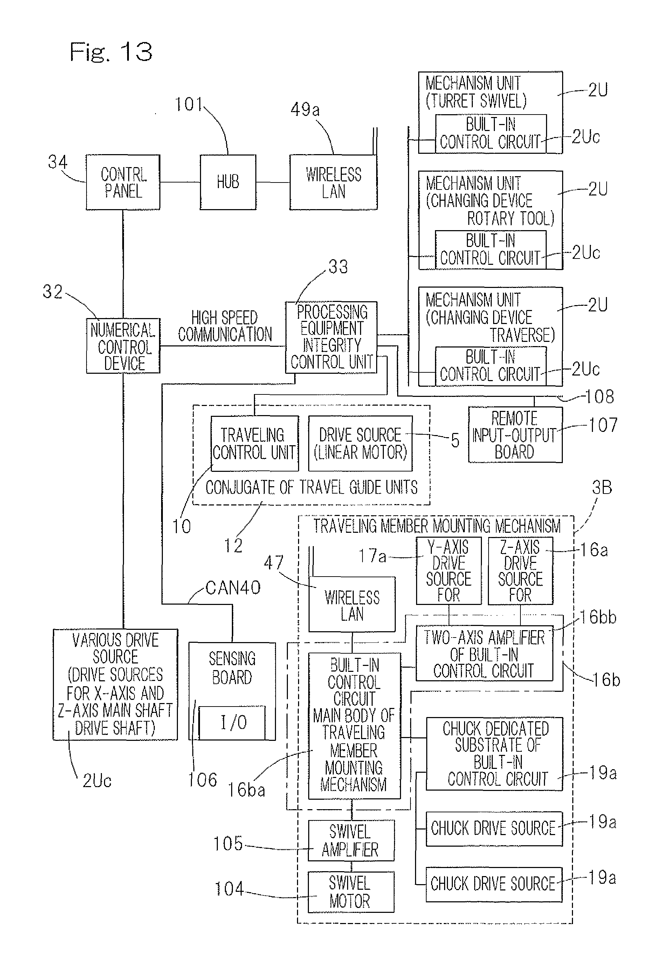

Fig. 13 illustrates a diagram with a form display modified, which is supplemented to the block diagram shown in Fig. 11. It is, however, to be noted that a difference exists in portion of the contents shown in Fig. 11. In this example, the control panel 34 is communicated with a wireless communicating unit 47, which is a wireless local area network terminal of the traveling member mounting mechanism 3B, through the hub 101 and also through a wireless communicating unit 49a, which is a wireless local area network terminal, and is then communicated with the built-in control circuits 16b and 19b of the traveling member mounting mechanism 3B via the wireless communicating unit 47. The built-in control circuit 16b is made up of a built-in control circuit main body 16ba and a two axis amplifier 16bb, and controls the Y-axis and Z-axis drive sources 16a and 17a with the two axis amplifier 16bb. By the built-in control circuit main body 16ba, a command is given to an amplifier 105 for a swivel motor 104 operable to exchange the respective positions of the two chucks 19. A sensing board 106 is connected with the processing equipment integrity control unit 33 through the CAN communication linkage 40 and a RIO (Remote Input-Output) board 107 is connected with the processing equipment integrity control unit 33 through RIO wiring.

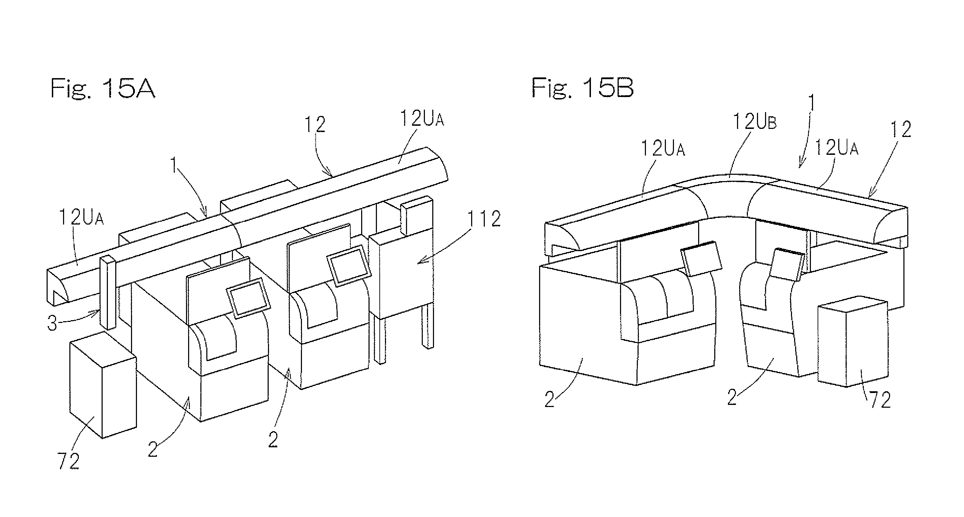

Fig. 14 to Figs. 16A to 16F illustrate explanatory diagrams showing the relation between various types of combinations of the travel guide units 12U in the conveyance apparatus 1 and the machine tool 2. In particular, Fig. 14 illustrates an example of a fundamental combination, which is made up of one machine tool 2 and one rectilinear travel guide unit 12U_{A}. In an example shown in Fig. 15A, a plurality of rectilinear travel guide units 12U_{A} are connected with each other, and a plurality of machine tools 2 are arranged along the rectilinear travel guide units 12U_{A}. In an example shown in Fig. 15B, two rectilinear travel guide units 12U_{A} and one curved travel guide unit 12U_{B} are connected to provide an L-shaped guide equipped frame 12 with a machine tool 2 arranged along each of the rectilinear sections.

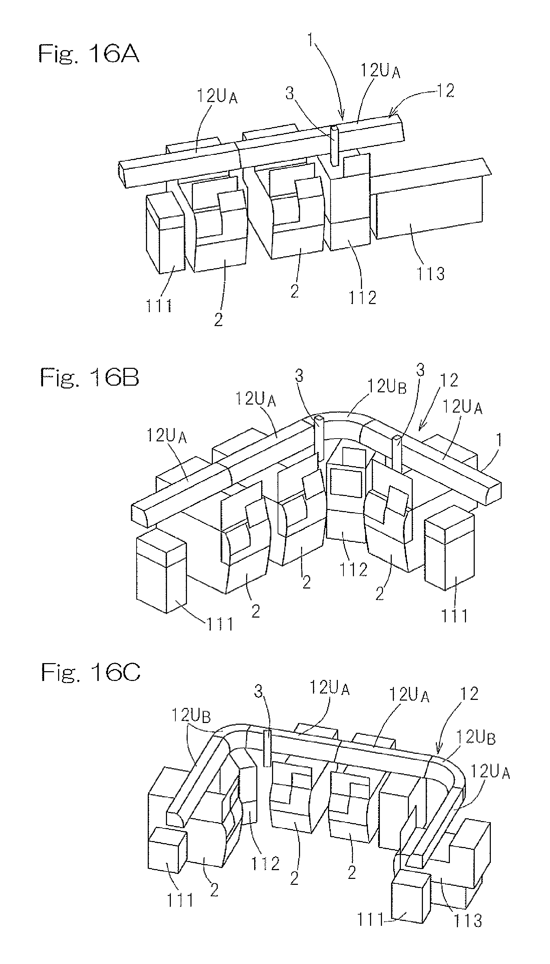

In an example shown in Fig. 16A, a plurality of rectilinear travel guide units 12U_{A} are connected together with two machine tools 2 installed therealong and, at the same time, a delivery stocker 111, an external measuring instrument 112 and a discharge conveyor 113, all of which are accessory equipments, are arranged. In an example shown in Fig. 16B, a plurality of or one rectilinear travel units 12U_{A} are connected on opposite sides of one curved travel guide unit 12U_{B} and a machine tool 2 is arranged in a rectilinear section and, at the same time, an external measuring instrument 112 is installed in a curved section. Also, two traveling members 3 are installed relative to the guide equipped frame 12. In an example shown in Fig. 16C, two curved travel guide units 12U_{B} and a plurality of rectilinear travel guide units 12U_{A} are connected to define a travel path of a U-shaped configuration and a machine tool 2 is disposed in each of rectilinear sections and an external measuring instrument 112 is disposed in a curved section.

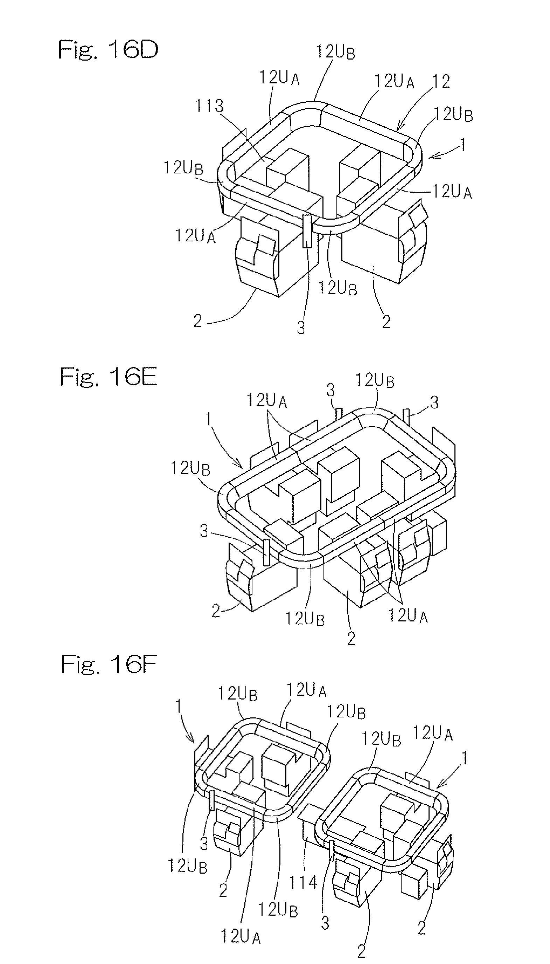

In an example shown in Fig. 16D, by a combination of four curved travel guide units 12U_{B} and four rectilinear travel guide units 12U_{A}, a ring shaped travel path of a square shape is formed, and machine tools 2 are disposed at two rectilinear sections. Also, a discharge conveyor 113 is disposed at a rectilinear section. In an example shown in Fig. 16E, by a combination of four curved travel guide units 12U_{B} and a plurality of rectilinear travel guide units 12U_{A}, a ring shaped travel path of an elongated rectangular shape is formed with machine tools 2 disposed in each of rectilinear section. Three travelling members 3 are installed on the guide equipped frame 12. In an example shown in Fig. 16F, the unit configuration type processing equipment of the structure shown in and described with reference to Fig. 16D is installed at two locations and a conveyor 114 is installed between those unit configuration processing equipments.

As described above, by combining the curved travel guide unit 12U_{B} and the rectilinear travel guide unit 12U_{A} together, the guide equipped frames 12 defining the various travel path can be configured. Also, since as the drive source for the traveling member 3, the linear motor 5 having the individual motors 6, which forms respective armatures on the primary side and which are arranged in the guide equipped frame 12, is employed, it is easy and possible to quickly install the plurality of the traveling members 3 on the single guide equipped frame 12.

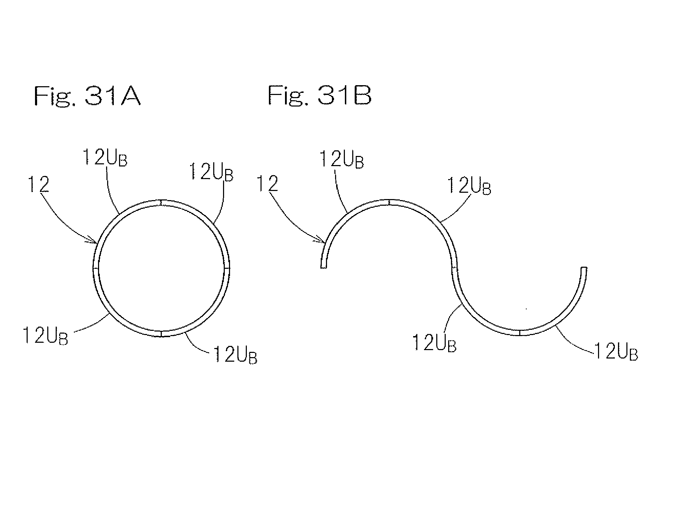

It is to be noted that by combining only the arcuately curved travel guide units 12U_{B}, a ring shaped guide equipped frame 12 or an S-shaped guide equipped frame 12 can be constructed as shown in Figs. 31A and 31B.

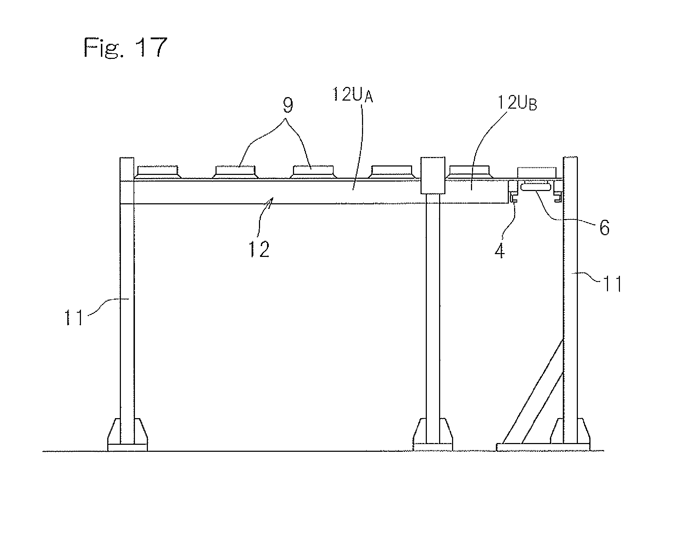

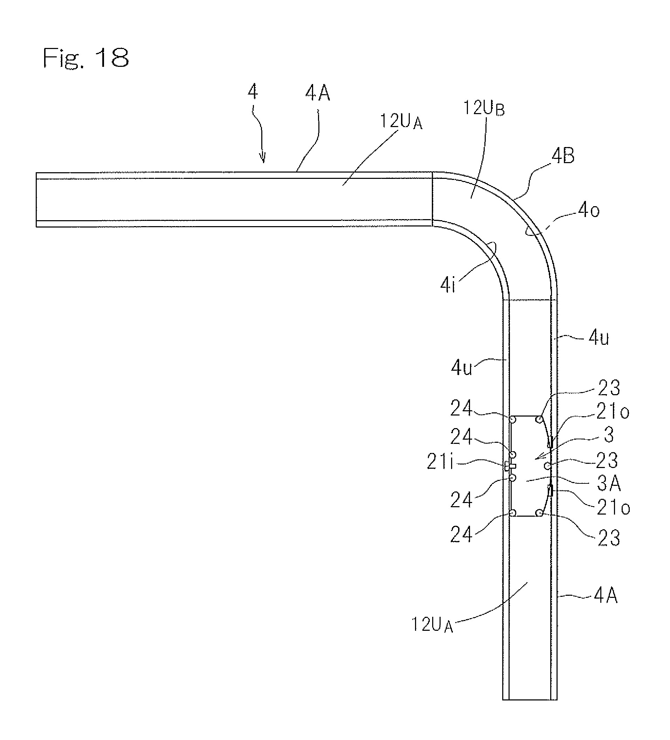

In the next place, the details of the conveyance apparatus 1, in which the travel guide units 12U of the construction hereinabove described are combined, and its travel guide units 12U will be described with particular reference to Figs. 17 to 30. As shown in Figs. 17 and 18, the guide equipped frame 12 defines an L-shaped transport path formed by connecting rectilinear travel guide units 12U_{A} with opposite ends of the single curved travel guide unit 12U_{B}.

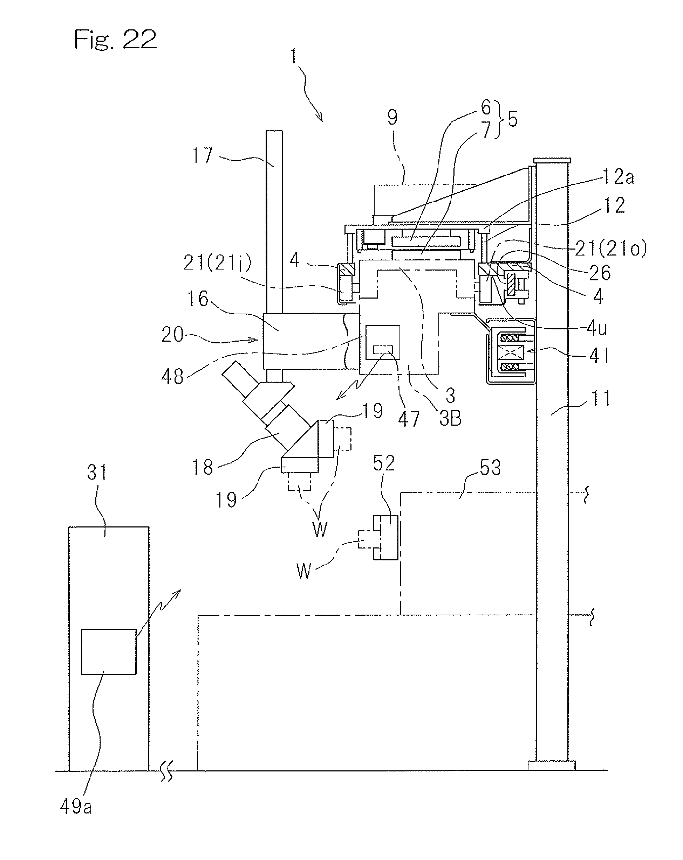

As shown in Fig. 22, the traveling member 3 is a carriage having traveling wheels 21 (21i and 21o) and has the traveling member mounting mechanism 3B installed in an undersurface thereof. The chuck 19, which is a holding unit to hold the work W, and a moving mechanism 20 to move the chuck 19 are provided in this traveling member mounting mechanism 3B. The moving mechanism 20 includes an anteroposterior moving carriage 16 mounted on the traveling member 3 to selectively advance and retract in an anteroposterior direction (Z-axis direction) perpendicular to the direction of travel (X-axis direction), a lifter 17 of a rod-like configuration mounted on this anteroposterior moving carriage 16 to selectively ascend and descend, and a work holding head 18 provided at a lower end of the lifter 17. The chuck 19 referred to previously is provided two in number on the work holding head 18. The two chucks 19 are adapted to be replaced by a chuck direction converting mechanism (not shown) within the work holding head 18 between a downwardly oriented position and a forwardly oriented position. A drive source for this chuck direction converting mechanism is the swivel motor 104 which has been shown in and described with reference to Fig. 13.

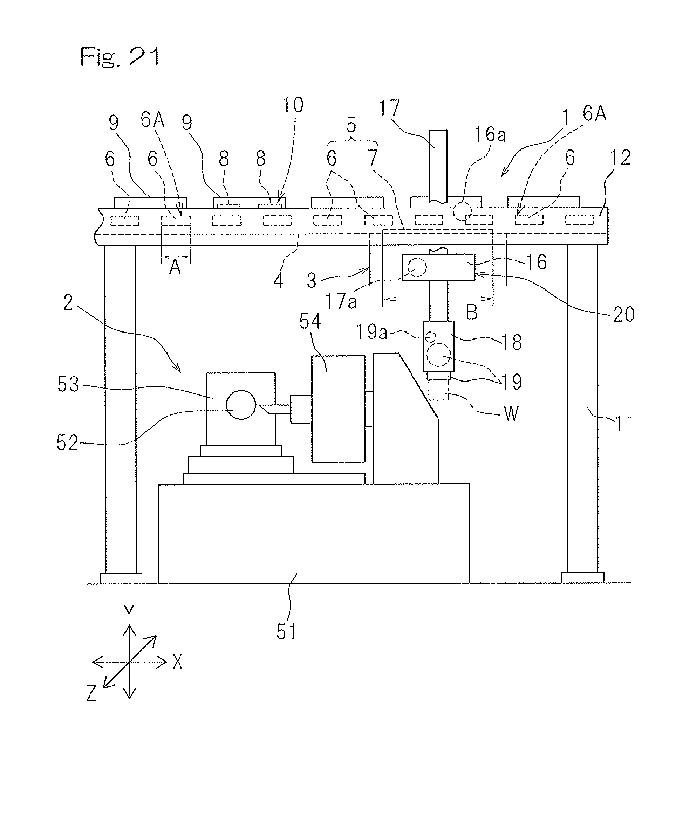

Referring to Fig. 21, the anteroposterior movable carriage 16 is operated by an electrically operated drive source 16a such as, for example, a motor mounted on the traveling member 3, so as to move in an anteroposterior direction and, on the other hand, the lifter 17 is driven by an electrically operated drive source 17a such as, for example, a motor mounted on the anteroposterior movable carriage 16 so as to ascend and descend. The chuck 19 has chuck pawls (not shown) that are selectively opened or closed by an electrically operated drive source 19a such as, for example, a solenoid to hold the work W.

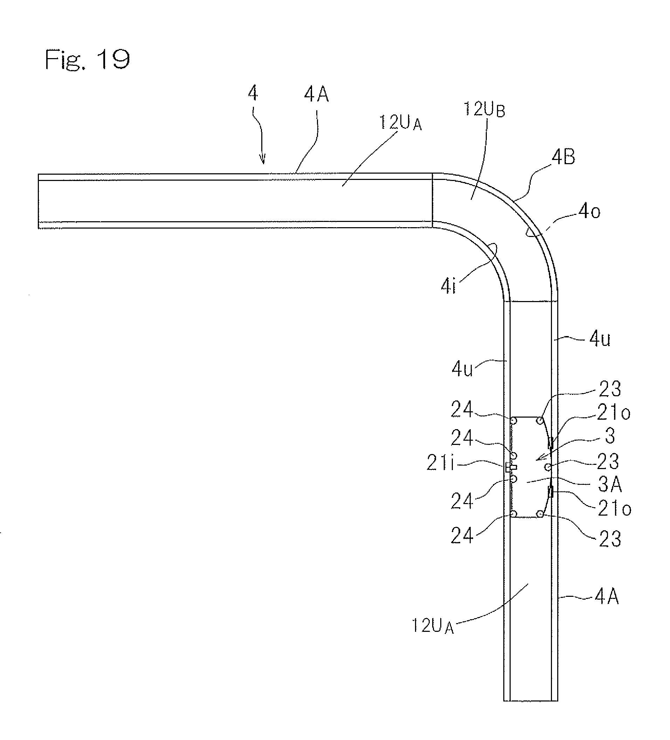

As shown in a top plan view in Fig. 19, the travel guide 4 is made up of the two rectilinear sections 4A and 4A, which lie perpendicular to each other, and the curved section 4B that connects the rectilinear sections 4A and 4A together. The curved section 4B is comprised of a single curved travel guide unit 12U_{B} and the rectilinear sections 4A and 4A are each comprised of the rectilinear travel guide unit 12U_{A}. There are provided an outer diameter side guide face 4o and an inner diameter side guide face 4i, which are continued over those rectilinear sections 4A and the curved section 4B and which are positioned on outer and inner diameter sides of the curved section 4B in parallel relation to each other so as to be oriented inwardly and outwardly, respectively. Further, there are provided a pair of wheel guide face 4u, oriented in a direction upwards and downwards, in the curved section 4B. Each of the wheel guide faces 4u is provided along the outer diameter side guide face 4o and the inner diameter side guide face 4i.

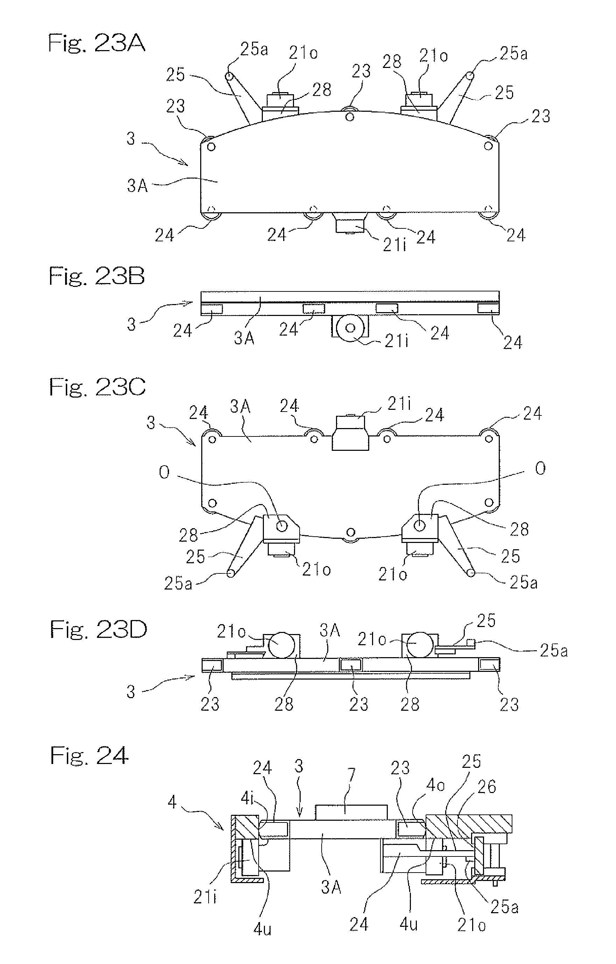

As shown in a sectional representation in Fig. 24, the outer diameter side guide face 4o and the inner diameter side guide face 4i are positioned above traveling wheels 21i and 21o that run on the wheel guide face 4u. The traveling member 3 is provided not only with the traveling wheels 21i and 21o, but also with outer diameter side rollers 23, which are guided by the outer diameter side guide face 4o, and inner diameter side rollers 24, which are guided by the inner diameter side guide face 4i. The outer and inner diameter side rollers 23 and 24 rotate about a vertical axis.

Referring to Figs. 23A to 23D, the number of the outer diameter side rollers 23 and that of the inner diameter side rollers 24 are chosen to be three or more, and those three or more outer and inner diameter side rollers 23 and 24 are arranged in respective rows extending in a direction parallel to the direction of travel. In the instance as shown, the outer diameter rollers 23 are positioned adjacent front and rear ends and an intermediate portion of the traveling member 3, thus totaling to three in number. Those three or more outer diameter side rollers 23 are arranged in an arcuate shape conforming to the arcuate shape of the outer diameter side guide face 4o which forms the curved section 4B (Fig. 19). On the other hand, the inner diameter side roller 24 are arranged in a rectilinear shape conforming to a portion of the inner diameter side guide face 4i which forms the rectilinear section 4A, thus totaling to four in number. In detail, the inner diameter side rollers 24 are positioned at two locations adjacent to front and rear ends of the traveling member 3 and two locations on anteroposterior sides of an intermediate portion of the traveling member 3. The traveling member 3 has a plan shape in which a side edge on the outer diametric side represents an arcuate shape following a portion of the outer diametric side guide face 4o forming the curved section 4B, but it may be of any suitable shape provided that it will not interfere with the travel guide 4, and is therefore of any freely designed shape.

The traveling wheels 21i and 21o in the traveling member 3 are provided on widthwise opposite sides so that these wheels 21i and 21o can run on the two guide faces 4u on the opposite sides. The traveling wheel 21o on the outer diameter side is rotatably mounted on a movable wheel support body 28 which is so supported as to be turned in direction about the vertical axis O relative to the traveling member 3. Each of those movable wheel support bodies 28 is provided with a direction manipulating element 25 of a lever-like shape protruding towards the outer diameter side, and a front end of the direction manipulating element 25 is provided with a cam follower 25a such as, for example, a roller that is rotatable about the vertical axis. A cam face 26 (best shown in Fig. 24) to guide the cam follower 25a at the free end of the respective direction manipulating element 25 is provided in the travel guide 4 over the entire length in a direction conforming to the direction of travel. This cam face 26 is so provided at a location, where the traveling member 3 enters the curved section (best shown in Fig. 19), that the direction of the associated traveling wheel 21o can be forcibly diverted.

Referring now to Fig. 21, a running drive of the traveling member 3 is carried out by a linear motor 5 of a synchronous type. The linear motor 5 is a discrete or discontinuous type linear motor including a plurality of individual motors 6, mounted on the frame 12, and a single mover or movable magnet array 7. Each of the individual motors 6 is of a type capable of functioning as an armature on the primary side of a separate, single linear motor. Those individual motors 6 are arranged along the travel guide 4 over the entire traveling zone of the traveling member 3 and having spaced a distance from each other. The mover 7 referred to above is comprised of a permanent magnet and is mounted on the traveling member 3. A travel control unit 10 to drive the linear motor 5 is made up of a plurality of individual motor drive devices 8 to drive the respective individual motors 6 and a multiple unit controllers 10 (which will be described in detail with particular reference to Fig. 30) to apply position commands and others to the individual motor drive devices 8. Two of the individual motor drive devices 8 are arranged into a motor drive circuit block 9 and the respective motor drive circuit block 9 is mounted on the frame 12.

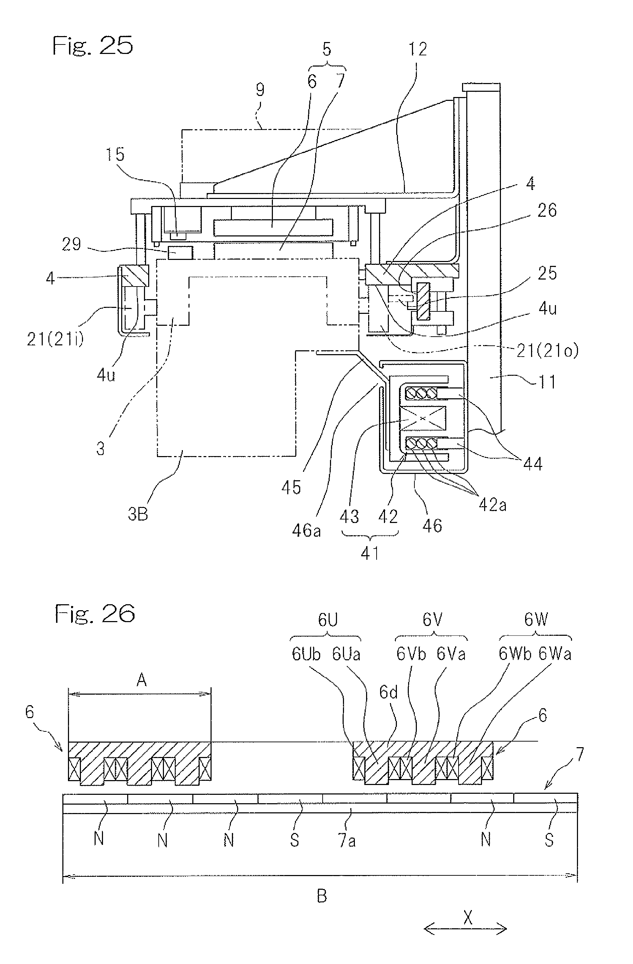

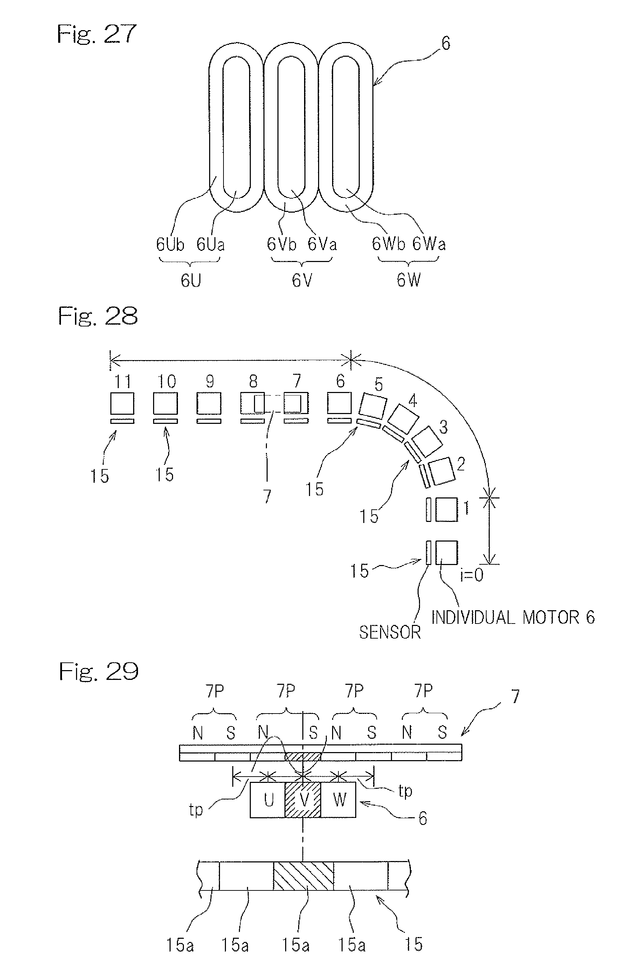

As shown in Figs. 26 and 27, each of the individual motors 6 is of a type that can be driven with a three-phase alternating current and is a three pole armature provided with three electrodes 6U, 6V and 6W one for each of the three phases (U, V and W phases). The direction of arrangement of those electrodes 6U, 6V and 6W conforms with a moving direction X of the mover 7. Each of those electrodes 6U, 6V and 6W is comprised of a core 6Ua, 6Va and 6Wa and a coil 6Ub, 6Vb and 6Wb. The cores 6Ua, 6Va and 6Wa are of a type protruding pectinately from a common core base portion 6d. The individual motors 6 arranged in a plural number are identical in structure with each other and, accordingly, respective lengths A thereof as measured in a direction conforming to a mover running direction are identical with each other. It is to be noted that although in this example, the number of the pole of each of the individual motors 6 has been shown and described as three, it may not be necessarily limited to three, but it may be an integral multiplicity of three, for example, nine.

The movers 7 each in the form of N and S magnetic poles comprised of a permanent magnet are provided in a plural number and are arranged on a mover base body 7a in a direction conforming to the traveling direction X. It is also to be noted that the number of the N and S magnetic pole pairs may be arbitrarily designed. The mover 7 has a length B enough to extend over the plurality of the individual motors 6.

Referring to Fig. 30, the multiple unit controller 10A of the travel control unit 10 is operable in response to a position command, fed from a host control unit, to apply position commands necessary to drive the corresponding individual motors 6 to respective individual motor control units 8. In other words, the position command, which is converted into a coordinate system of each of the individual motors 6, is applied to the individual motor control units 8 for the respective individual motors 6. The multiple unit controller 10A is comprised of a computer such as, for example, a microcomputer or a personal computer, a program therefor, circuit elements and so on.

Each of the individual motor control units 8 is made up of a motor drive circuit (not shown) of a strong current system for supplying an electric motor current to the associated individual motor 6 and a control unit (not shown) of a weak current system for controlling this motor drive circuit, and includes a substrate having various circuit elements mounted thereon. The motor drive circuit of the strong current system is comprised of an inverter or the like provided with a plurality of switching elements and is connected with a direct current source (not shown) for driving purpose. The control unit of the weak current system for each of the individual motor control units 8 and the multiple unit controller 10A is comprised of a microcomputer and a program therefor and various circuit elements and so on.

Each of the individual motor control units 8 has a function of controlling a feedback control of the position, velocity and electric current in a cascade control. The position feedback performs a feedback control of a predetermined position loop gain in dependence on a deviation between a detection value of a sensor 15 to detect the current position of the mover 7 relative to the individual motor 6 and a command value of the position command. The velocity feedback is carried out with the use of a speed detection value obtained through a derivation from the position detection value of the sensor 15. The current feedback is such as to control an electric motor drive current by detecting a drive current, applied to the individual motor 6, with an electric current detecting unit 14, and then generating the electric current value dependent on the deviation between the electric current detection value and the electric current command value with the use of a predetermined electric current loop gain. This electric current control unit is of a type capable of performing a control by means of a vector control or the like and has a function of performing an electric current control in correspondence with the magnetic pole position of the mover 7.

As shown in Fig. 28, each of the sensors 15 is a linear scale, which is arranged in a rectilinear direction conforming to the direction of arrangement of the coils of the individual motors 6 and is of a type capable of accomplishing a position detection within a somewhat longer range than the length of the individual motors 6. Each of the sensors 15 is, as specifically shown in Fig. 29, comprised of a plurality of sensor elements 15a arranged in a direction lengthwise thereof, and each of those sensor elements 15a is comprised of a magnetic sensor element for detecting the magnetism of the mover 7.

More specifically, each of the sensor elements 15a is operable to detect the magnetic pole position of the magnetic pole pair 7P of each of the mover 7. In other words, for the length tp of the magnetic pole pair 7P, a magnetic force having a peak of one N-pole side and S-pole side is generated, and therefore, the detection of the peak position on the N-pole side or S-pole side results in detection of the magnetic pole position. Also, the sensor 15 outputs one position detection value, which is the position of the mover 7, from an output of each of the sensor elements 15a. It is to be noted that the sensor 15 is provided as a position sensor for detecting merely the position of the mover 7 and a magnetic pole sensor may be provided separate from the sensor 15, or a particular one of the sensor elements 15a of the sensor 15 may be used as a magnetic pole sensor for detecting an electric current by means of magnetic poles.

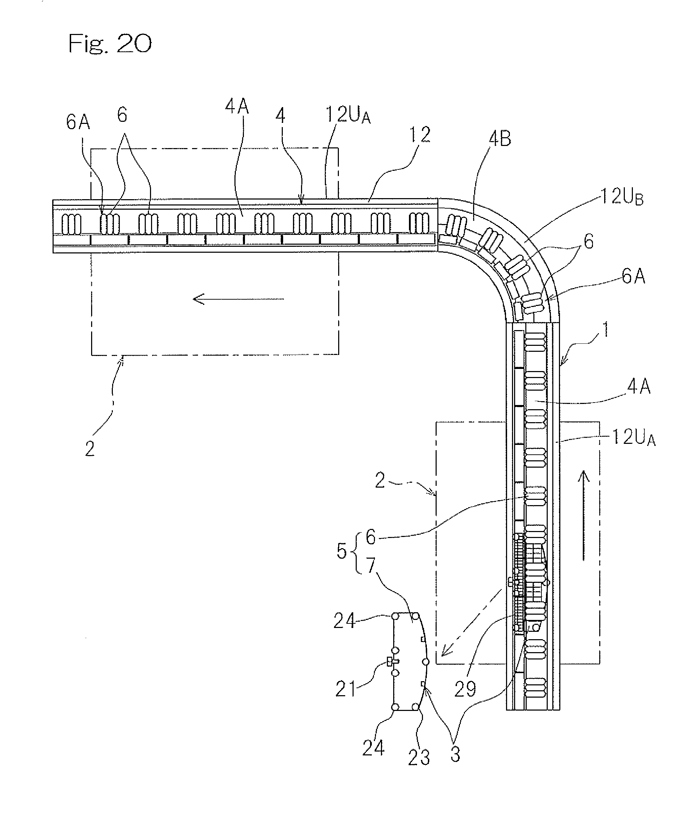

It is to be noted that although in the foregoing description the magnetic pole position of the mover 7 has been shown and described as detected directly, positioning of the sensors 15 is difficult to achieve in order to directly detect the magnetic pole position. In view of this, in the embodiment now under discussion, as best shown in Figs. 20 and 25, a plurality of position detecting magnets 29 are provided in the traveling member 3 so as to assume a position laterally of the mover 7 so that the magnetic pole position of the magnets 29 in the traveling direction may align with magnetic pole position of the mover 7. The sensor 15 detects the magnetic pole position of the mover 7 by detecting the position detecting magnets 29.

Referring to Fig. 30, the individual motor 6, the individual motor control unit 8 and the sensor 15 cooperate with each other to define one set of the individual motor set 6A. This individual motor set 6A is installed on the frame 12 along the travel guide 4 as shown in Fig. 21. As shown in Fig. 20, even at the curved section 4B of the travel guide 4, the individual motor set 6A is installed in a manner similar to that in the rectilinear section 4A. In the individual motor set 6A in the curved section 4B, the individual motor control unit 8 (best shown in Fig. 30) has a function of correcting the detection value of the sensor 15 in dependence on the curved line.

As shown in Fig. 22, the traveling member 3 has the chuck 19, which forms a holding unit for the work W, and the chuck moving mechanism 20 to move the chuck 19 in an anteroposterior direction and in a vertical direction, which are directions different from the traveling direction of the traveling member 3. The drive sources 16a and 17a (best shown in Fig. 21) of the moving mechanism 20 and the drive source 19b for the chuck 19 are of electrically operated type, and supply of an electric power to these drive sources 16a, 17a and 19a is carried out by a non-contact power feeding device 41.

As best shown in Fig. 25, the non-contact power feeding device 41 referred to above includes an electric power supplying unit 42, comprised of wirings 42a on the primary side of each of the poles provided along the travel guide 4, and an electric power receiving unit 43, comprised of a coil on the secondary side, provided in the traveling member 3 for movement while held in a fashion proximate to and along the wirings 42a. The wirings 42a are supported by a wiring support member 44. The wiring support member is installed on the frame 12a provided in the travel guide 4 or on the pillar 11 used to support the frame 12a. The electric power receiving unit 43 comprised of a coil in each phase is supported by the traveling member 3 through a movable side support member 45. The coil in each phase, which forms the electric power receiving unit 43, is connected with the drive sources 16a, 17a and 19a of the moving mechanism 20 referred to previously. The wirings 42a of the electric power supplying unit 42 are covered by a covering 46 having a slit 46a defined therein for the passage of the movable side support member 45 therethrough.

It is to be noted that the wiring 42a of the non-contact power feeding device 41 may be provided either in the travel guide unit 12U or separate from the travel guide unit 12U. It is to be noted that since an electric current received by the electric power receiving unit 43 is an alternating current resulting from an induced current, the individual motor control unit 8 is provided with a rectifying circuit (not shown) for rectifying the alternating current and this rectifying circuit serves as a direct current power source for the inverter referred to previously.

Also, the traveling member 3 has mounted thereon a wireless communicating unit 47 forming the wireless LAN, and a command transmitting unit 48 is mounted on the traveling member 3, which unit 48 controls the respective electrically operated drive sources 16a, 17a and 19a of the moving mechanism 20 and the chuck 19 in response to a signal communicated by the wireless communicating unit 47. The command transmitting unit 48 may be in the form of a wiring for merely transmitting a signal between the wireless communicating unit 47 and the drive sources 16a, 17a and 19a. Also, the command transmitting unit 48 includes a wiring for sending, in addition to a command to drive, signals of various sensors (not shown), provided in the traveling member 3, to the wireless communicating unit 47. The wireless communicating unit 47 on the traveling member 3 communicates with a wireless communicating unit 49a provided in a main control device 31 for controlling the entire conveyance system. The various drive sources mounted on the traveling member 3 are all electrically operated ones and, hence, wirings and piping necessary to connect with the ground side are all eliminated.

According to the unit configuration type processing equipment of the construction described hereinabove, as shown in Fig. 1A, the machine tool 2 is of a unit configuration type, and the base 2A and each of the mechanism units 2U have the base portion wiring 62 or the unit portion wiring 67 and its terminals 63, 64, 68 and 69. Therefore, when the mechanism unit 2U is recombined, a wiring work of the machine tool 2 completes when connection is made to the terminals 64, 68 and 69 provided in the base 2A and the mechanism unit 2U. Because of this, unlike the conventional system in which mechanism portions are merely unitized, the degree of freedom of recombination and expansion, including a connecting work of the wiring system, is high, and, therefore, recombination in the field can be facilitated and can be accomplished quickly.

Regarding the drive source 2Ub among the drive sources 2Ub of the respective mechanism units 2U, which is driven under the sequence control, since the unit built-in control circuit 2d to drive the drive source 2Ub is provided in such mechanism unit 2U, there is no need to add a new drive circuit to the main control device 31 nor to modify the drive circuit in the main control device 31, and a minor change in program or the like is sufficient in the main control device 31. For this reason, recombination and/or expansion of the machine tool 2 can be further facilitated and can be further quickly accomplished.

Since in addition to the unitization of the machine tool 2, the guide equipped frame 12 in the conveyance apparatus 1 is also unitized, not only can the change in form of the machine tool 2 be accomplished, but also the change in form can be accomplished freely as to the number of installations and the change in arrangement. Because of these, the change in form can be quickly achieved to an optimum processing equipment suited for the mixed production. Since each of the travel guide units 12U includes the individual motor 6, which forms the respective armature of the linear motor 5, and the sensors 15 to detect the position of the mover 7, the recombination can be further easily accomplished and can be quickly carried out. Since each of the travel guide units 12U includes the inverter to supply an electric driving power to the individual motors 6 and the individual motor control unit 8 having a control part to control the respective individual motors 6 by controlling the inverter, the recombination can be further easily and quickly accomplished.

Since the travel guide unit 12U is provided with the travel guide unit 12U_{A}, which forms the rectilinear section, and the travel guide unit 12U_{B}, which forms the curved section, by the combination of these travel guide units 12U_{A} and 12U_{B}, the transport path can be formed to represents a free path shape such as the L-shaped confirmation and/or the ring shape as shown in and described with particular reference to Fig. 14 to Figs. 16A to 16F.

Also, according to the conveyance apparatus 1 of the construction described above, since the linear motor 5 comprised of the individual motors 6, disposed along the travel guide 4, and the movers 7 on the secondary side installed in the traveling member 3 is utilized for driving the traveling member 3, the traveling member 3 can be precisely positioned even in the curved section 4B of the travel guide 4. For this reason, while the transfer table 71 to deliver and receive the work W relative to the travel body 3 is positioned at the curved section 4B, not only can the work W be assuredly delivered and received through the precise halting and positioning, but also the attitude of the work W, the holding position and others can be set properly. With the curved section 4B of the travel path used for delivery and receipt of the work W in this way, limitations imposed on the arrangement of the various machines and equipments within the factory can be relieved and the limited floor space in the factory can be utilized efficiently.

In addition, while the traveling member 3 has the chuck 19 and the moving mechanism 20 for moving the chuck 19, the supply of the electric power is made through the non-contact power feeding device 41. Accordingly, the use of any cable wiring for the supply of the electric driving power is dispensed with in view of the structure employed for driving the traveling member 3 by means of the linear motor 5 including the mover 7 on the secondary side provided in the traveling member 3. Because of this, the use of any cable required to accomplish the electric power supply between the traveling member 3 and the ground part is eliminated, allowing the transport path to be freely designed. Also, in the practice of this embodiment, the wireless communicating unit 47 is mounted on the traveling member 3 and by means of the signal communicated by the wireless communicating unit 47 the chuck 19 and the moving mechanism 20 are controlled. Thus, in addition to the non-contact power feeding, the wireless communicating unit 47 is used to transmit and receive the signal for controlling, and therefore, it is possible to dispense with any wiring between the traveling member 3 and the ground part as well as a transmission system for the control command. Accordingly, it is possible to design the transport path freely as desired.

In addition, the linear motor 5 is used for driving the traveling member 3; this linear motor 5 is of the type in which the mover 7 on the secondary side is in the form of the permanent magnet of a kind having the N and S magnetic poles alternately arranged in a direction conforming to the direction of travel; and the use is made of the sensor 15 for detecting the magnetic poles of the mover 7 or for detecting the magnetic poles of the detection magnets 29 that are provided in the traveling member 3 in a pattern identical with that of the magnetic poles of the mover 7. The positioning control of the traveling member 3 is performed in response to the output of the sensor 15 for detecting the magnetic poles. Because of this, a further precise positioning control can be accomplished, and also a highly precise positioning can be accomplished even at the curved section. Accordingly, the delivery and receipt of the work W relative to the transfer table 71 at the curved section 4B can be performed further assuredly at a further proper angle.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: Conveyance apparatus
- 2: Machine tool
- 2A: Base
- 2U: Mechanism unit
- 2U₁, 2U₂, 2U₃: Mechanism unit
- 2Ua: Unit main body
- 2Ub: Movable part
- 2Uc: Drive source
- 2Ud: Unit built-in control circuit
- 2UG₁₁: Mechanism of standard turret
- 2UG₁₂: Mechanism unit of rotary tool turret
- 2UG₁₃: Mechanism unit having Y-axis function
- 2UG₂₁: Mechanism unit of group G2
- 2UG₃₁: Mechanism unit which will become the headstock device
- 2UG₃₂: Mechanism unit which will become the headstock device
- 2UG₄₁, 2UG₅₁: Mechanism unit
- 3B: Traveling member mounting mechanism
- 4: Travel guide
- 5: Linear motor
- 6: Individual motor
- 7: Mover
- 8: Individual motor control unit
- 9: Motor drive circuit part
- 10: Travel control device
- 10A: Multiple unit controller
- 12a: Frame
- 12: Guide equipped frame
- 12U: Travel guide unit
- 12U_{A}: Travel guide unit for rectilinear section
- 12U_{B}: Travel guide unit for curved section
- 14: Electric current detecting unit
- 15: Sensor
- 19: Chuck (Work holding unit)
- 16a, 17a, 19a: Drive source
- 21(21i, 21o): Traveling wheel
- 31: Main control device
- 32: Numerical control device
- 33: Processing equipment integrity control unit
- 34: Control panel
- 41: Non-contact power feeding device
- 47: Wireless communicating unit
- 61: Unit installing seat
- 61u: Unit installing seat
- 62: Base portion wiring
- 63, 64: Terminal
- 65: Installing portion
- 67: Unit portion wiring
- 68, 69: Terminal
- W: Work (Workpiece)

## Claims

1. A unit configuration type machine tool comprising a plurality of mechanism units, in which
each of the mechanism units includes a connecting unit to mechanically connect the other mechanism units or one of component elements of the machine tool with each other, and
at least one of the mechanism units is an assembly component part of a kind having a movable part and/or a drive source and also having a unit portion wiring and a terminal to connect the unit portion wiring.

2. The unit configuration type machine tool as claimed in claim 1, further comprising a base, the base including:
a plurality of unit installing seats to removably install any one of the mechanism units;
a base portion wiring; and
terminals on a main control device side and a mechanism unit side that is connected with the base portion wiring,
in which each of the mechanism units is of a type that is removably installed on the unit installing seat of the base or on the mechanism unit mounted on the unit installing seat of the base, and having a terminal and a unit portion wiring that are connected with a terminal on the mechanism unit side of the base or a terminal of the unit portion wiring provided in the other mechanism unit.

3. The unit configuration type machine tool as claimed in claim 2, in which at least one of the mechanism units includes a unit built-in control circuit to drive the drive source of the mechanism unit, the unit built-in control circuit being connected with the main control device through the unit portion wiring of the mechanism unit and the base portion wiring of the base.

4. A unit configuration type conveyance apparatus to load and unload a work onto and from a machine tool, which comprises:
a guide equipped frame having a travel guide; and
a traveling member movable along the travel guide, the traveling member having a holding unit to hold the work;
in which the guide equipped frame is comprised of a plurality of travel guide unit connected with each other in a direction conforming to a traveling direction of the traveling member.

5. The unit configuration type conveyance apparatus as claimed in claim 4, in which the travel guide unit includes one of an electric component and an electric wiring.

6. The unit configuration type conveyance apparatus as claimed in claim 5, in which a drive source to cause the traveling member of the conveyance apparatus to move is a linear motor, the linear motor comprising a plurality of armatures on a primary side, that are arranged along the travel guide, and a mover provided in the traveling member, and
in which each of the travel guide units is provided with the armatures and a sensor to detect a position of the mover as the electric component parts.

7. The unit configuration type conveyance apparatus as claimed in claim 6, in which each of the travel guide units comprises:
an inverter to supply an electric driving power to each of the armatures; and
a control part to control the armatures by controlling the inverter.

8. The unit configuration type conveyance apparatus as claimed in any one of claims 4 to 7, in which the plurality of the travel guide units include a travel guide unit, which forms a rectilinear section of the travel guide, and a travel guide unit which forms a curved section of the travel guide.

9. A unit configuration type processing equipment which comprises:
a machine tool, the machine tool being a unit configuration type machine tool equipped with a plurality of types of mechanism units; and
a conveyance apparatus to load and unload a work relative to the machine tool,
in which each of the mechanism units includes a connecting unit to mechanically connect the other mechanism units or one of component elements of the machine tool with each other, and
at least one of the mechanism units is an assembly component part of a kind having a movable part and/or a drive source and also having a unit portion wiring and a terminal to connect the unit portion wiring.

10. The unit configuration type processing equipment as claimed in claim 9, further comprising a base, the base including:
a plurality of unit installing seats to removably install any one of the mechanism units;
a base portion wiring; and
terminals on a main control device side and a mechanism unit side that is connected with the base portion wiring,
in which each of the mechanism units is of a type that is removably installed on the unit installing seat of the base or on the mechanism unit mounted on the unit installing seat of the base, and having a terminal and a unit portion wiring that are connected with a terminal on the mechanism unit side of the base or a terminal of the unit portion wiring provided in the other mechanism unit.

11. The unit configuration type processing equipment as claimed in claim 9, wherein the conveyance apparatus is a unit confirmation type conveyance apparatus, which comprises:
a guide equipped frame having a travel guide; and
a traveling member movable along the travel guide, the traveling member having a holding unit to hold the work;
in which the guide equipped frame is comprised of a plurality of travel guide unit connected with each other in a direction conforming to a traveling direction of the traveling member.

12. The unit configuration type processing equipment as claimed in claim 11, in which the travel guide unit includes one of an electric component and an electric wiring.

13. The unit configuration type processing equipment as claimed in claim 11, in which the machine tool is a unit configuration type machine tool including a base and a plurality of types of mechanism units,
the base comprises:
a plurality of unit installing seats to removably install any one of the mechanism units;
a base portion wiring; and
terminals on a main control device side and a mechanism unit side that is connected with the base portion wiring; and
in which each of the mechanism units is of a type that is removably installed on the unit installing seat of the base or on the mechanism unit mounted on the unit installing seat of the base, and having a terminal and a unit portion wiring that are connected with a terminal on the mechanism unit side of the base or a terminal of the unit portion wiring provided in the other mechanism unit.

14. The unit configuration type processing equipment as claimed in claim 13, in which at least one of the mechanism units includes a unit built-in control circuit to drive the drive source of the mechanism unit, the unit built-in control circuit being connected with the main control device through the unit portion wiring and the terminal of the mechanism unit and also the base portion wiring and the respective terminals of the base.

15. The unit configuration type processing equipment as claimed in claim 13 or claim 14, in which the travel guide unit includes one of an electric component and an electric wiring.

16. The unit configuration type processing equipment as claimed in claim 13 or claim 14, in which a drive source to cause the traveling member of the conveyance apparatus to move is a linear motor, the linear motor comprising a plurality of armatures on a primary side, that are arranged along the travel guide, and a mover provided in the traveling member, and
in which each of the travel guide units is provided with the armatures and a sensor to detect a position of the mover.

17. The unit configuration type processing equipment as claimed in claim 16, in which each of the travel guide units comprises:
an inverter to supply an electric driving power to each of the armatures; and
a control part to control the armatures by controlling the inverter.

18. The unit configuration type processing equipment as claimed in claim 13 or claim 14, in which the plurality of the travel guide units include a travel guide unit, which forms a rectilinear section of the travel guide, and a travel guide unit which forms a curved section of the travel guide.

19. A mechanism unit for a machine tool comprising an assembly component having a movable part and a drive source and adapted to be used in a unit configuration type machine tool of a type defined in claim 2, which mechanism unit comprises:
a terminal and a unit portion wiring, adapted to be connected either with a terminal of the base on the mechanism unit side or with a terminal of a unit portion wiring provided in a mechanism unit on a low stage side; and
a unit built-in control circuit to drive the drive source.

20. A travel guide unit that is used in the unit configuration type conveyance apparatus as defined in claim 4, which travel guide unit comprises:
a travel guide section forming a part of a lengthwise direction of the travel guide;
a frame portion having the travel guide section installed therein;
an armature installed in the frame portion;
a mover provided in the traveling member; and
a sensor installed in the frame portion to detect a position of the mover.
